# DEMANDE DE BREVET EUROPEEN

(11) **EP 4 120 621 A1**
(43) Date de publication de la demande: **18.01.2023**
(21) Numéro de dépôt: 22182460.0
(22) Date de dépôt: 01.07.2022
(51) Int. Cl.: H04L 9/08, H04L 9/32

(54) **DISPOSITIF DE FONCTION PHYSIQUEMENT NON CLONABLE**

(30) Priorité: 13.07.2021 FR 2107580
(71) Demandeur: STMicroelectronics (Rousset) SAS, 13790 Rousset (FR); STMicroelectronics International N.V., 1118 BH Schiphol (NL)
(72) Inventeur: LA ROSA, Francesco, 13790 ROUSSET (FR); BILDGEN, Marco, 74420 HABERE-POCHE (FR)
(74) Mandataire: Casalonga

(57) **Abrégé**

Dispositif intégré de fonction physiquement non clonable, comprenant un premier module de fonction physiquement non clonable (MPF1), interne au dispositif (DIS), configuré pour générer un groupe de données initiales (RD2) et des moyens de gestion (MGST), internes au dispositif, au moins configurés pour
-générer un groupe de données de sortie (HUK2) à partir d'au moins le groupe de données initiales (RD2),
-autoriser uniquement D délivrances successives du groupe de données de sortie (HUK2) sur une première interface de sortie (INST1) du dispositif, D étant un entier positif non nul, et
-empêcher toute nouvelle génération du groupe de données de sortie (HUK2).

## Description

Des modes de mise en œuvre et de réalisation de l'invention concernent les fonctions physiquement non clonables (PUF : Physical Unclonable Function), et tout particulièrement celles réalisées au sein d'un circuit intégré.

Une fonction physiquement non clonable permet de générer automatiquement un code unique non prédictible qui dépend de caractéristiques physiques aléatoires ou partiellement aléatoires de la fonction physiquement non clonable. Ces caractéristiques physiques peuvent être provoquées par des variations durant la fabrication de la fonction physiquement clonable.

Ainsi, le clonage d'une telle fonction est très difficile voire impossible.

Par ailleurs, le contenu du code généré, qui est unique, car différent d'une fonction physiquement non clonable à une autre fonction physiquement non clonable, ne peut pas être prévu et peut dépendre par exemple d'une configuration particulière de composants lors de la mise sous tension de la fonction. Ainsi, par exemple, une fonction physiquement non clonable peut être réalisée par une mémoire non volatile qui présente un contenu lors de la mise sous tension qui dépend des caractéristiques physiques partiellement aléatoires de la mémoire, ces variations de fabrication conduisant à des caractéristiques physiques différentes pour différentes mémoires.

Il est souhaitable que les variations aléatoires des caractéristiques physiques soient facilement identifiables pour distinguer sans équivoque différentes données.

En outre, il est souhaitable que les réalisations de fonctions physiquement non clonables ne nécessitent pas ou peu d'étapes de fabrication dédiées.

Les codes uniques non-prédictibles comportent typiquement une suite de données aléatoires et sont principalement utilisés en tant que clés de chiffrement. Ces données sont typiquement secrètes.

On peut réaliser des fonctions physiquement non clonables à l'aide par exemple de mémoires vives ou non volatiles, ou encore d'oscillateurs en anneaux ou encore de circuits logiques spécifiques.

Cependant, ces dispositifs de l'art antérieur peuvent dans certains cas être plus ou moins facilement détectables au sein du circuit intégré ou alors être sensibles à des attaques par injection de faute, ou encore d'un encombrement surfacique pénalisant.

Il existe donc un besoin de renforcer la sécurité des structures de fonction physiquement non clonable, et de proposer notamment des structures de fonction physiquement non clonable dont les données sont clairement discriminables en lecture, tout en étant difficilement extractibles par des attaques de tiers.

Il serait en outre appréciable que les structures soient faciles à réaliser dans les technologies existantes et présentent un encombrement surfacique non pénalisant.

Selon un mode de réalisation il est proposé un dispositif de fonction physiquement non clonable qui ne puisse être utilisé qu'un nombre prédéfini de fois, le dispositif devenant inopérant après que ce nombre de fois a été atteint.

Une application possible, mais non exclusive, d'un tel dispositif est par exemple une limitation du nombre d'appariements possibles entre des appareils, par exemple des imprimantes, et des objets, par exemple des cartouches d'encre.

Selon un autre mode de réalisation il est proposé un dispositif de fonction physiquement non clonable qui puisse à la fois délivrer ce code unique non prédictible, pouvant servir par exemple de clé de chiffrement/déchiffrement, un nombre prédéfini de fois, et délivrer, un autre code unique non prédictible pouvant servir également par exemple de clé de chiffrement et ce un nombre illimité de fois.

Ainsi selon cet autre mode de réalisation il est proposé un dispositif de fonction physiquement non clonable capable de fournir par exemple une première clé à usage limité et une deuxième clé à usage illimité.

Selon un aspect il est proposé un dispositif intégré de fonction physiquement non clonable, comprenant
- un premier module de fonction physiquement non clonable, interne au dispositif, configuré pour générer un groupe de données initiales, et
- des moyens de gestion, internes au dispositif, configurés pour
   o générer un groupe de données de sortie à partir d'au moins le groupe de données initiales,
   o autoriser uniquement D délivrances successives du groupe de données de sortie sur une première interface de sortie du dispositif (c'est-à-dire à l'extérieur du dispositif), D étant un entier positif non nul, et
   o empêcher toute nouvelle génération du groupe de données de sortie.

Le groupe de données de sortie, c'est-à-dire le code unique non prédictible formant par exemple une première clé à usage limité, peut être par exemple le groupe de données initiales généré par le premier module, ou bien être obtenu par exemple par une combinaison de ce groupe de données initiales et de données supplémentaires elles-mêmes générées par un deuxième module de fonction physiquement non clonable.

Le nombre D est déterminé par exemple par la somme du nombre d'utilisation du dispositif en test et du nombre d'utilisations opérationnelles du dispositif par l'utilisateur final.

Par ailleurs le premier module de fonction physiquement non clonable et les moyens de gestion sont internes au dispositif intégré, ce qui rend le dispositif intégré autonome sans qu'il ait à recevoir de données externes pour délivrer le groupe de données de sortie, c'est-à-dire le code unique non prédictible.

Ceci rend le dispositif encore plus robuste.

Selon un mode de réalisation, les moyens de gestion sont configurés pour empêcher toute nouvelle génération du groupe de données de sortie en empêchant toute nouvelle génération du groupe de données initiales.

Selon un mode de réalisation, le premier module comprend
- un premier ensemble de cellules-mémoires non volatiles possédant chacune un transistor de sélection enterré dans un substrat semi-conducteur et un transistor d'état du type à appauvrissement, ayant une grille de commande et une grille flottante, les transistors d'état ayant des tensions de seuils effectives respectives appartenant à une distribution aléatoire commune, et
- des moyens de lecture configuré pour délivrer le groupe de données initiales à partir d'une lecture des tensions de seuil effectives des transistors d'état des cellules-mémoires dudit premier ensemble.

Ce type de cellules-mémoires non volatiles avec transistor de sélection enterré a une structure particulièrement compacte. Elle a été décrite en détails par exemple dans la demande de brevet US 2013/0 228 846.

Il est possible de lire une cellule-mémoire du premier ensemble en appliquant une tension nulle sur la grille de commande, par exemple en reliant cette grille de commande à la masse, car le transistor d'état est normalement passant.

Par ailleurs, le transistor d'état étant du type à appauvrissement, le caractère passant, (« normally on ») du transistor d'état lorsque la cellule-mémoire est par exemple dans un état vierge et qu'une tension nulle est appliquée sur la grille de commande, est lié à la valeur de la tension de seuil dans l'état vierge de cette cellule-mémoire qui peut par exemple être choisie négative ou sensiblement nulle.

A titre indicatif, cette tension de seuil peut être de l'ordre de -1 volts.

Les transistors d'état de toutes les cellules-mémoires du premier ensemble ont la même tension de seuil théorique. Mais, ce sont les tensions de seuil effectives, c'est-à-dire les valeurs réelles des tensions de seuil, qui varient légèrement suivant la dispersion aléatoire, par exemple due à des aléas physiques de fabrication.

Et, la distribution aléatoire commune est avantageusement une distribution de tensions de seuil effectives de transistors d'état de cellules-mémoires vierges n'ayant jamais été écrites.

Selon un mode de réalisation, le premier ensemble de cellules-mémoires non volatiles est organisé en deux premiers sous-ensembles matriciels disposés symétriquement par rapport aux moyens de lecture, toutes les lignes des deux premiers sous-ensembles matriciels étant parallèles, et -les moyens de lecture sont configurés pour effectuer ladite lecture comportant des lectures différentielles des tensions de seuil effectives des transistors d'état des paires de cellules-mémoires symétriques et situées respectivement dans les deux premiers sous-ensembles sur des colonnes homologues de ces deux premiers sous-ensembles.

Deux colonnes homologues des deux premiers sous-ensembles s'entendent comme étant des colonnes ayant la même adresse colonne.

La répartition du premier ensemble en deux sous-ensembles matriciels symétriques associés à l'approche différentielle au niveau de la lecture, est particulièrement avantageuse en ce sens qu'elle permet d'augmenter la dispersion au sein de la distribution aléatoire commune des tensions de seuil effectives des transistors d'état.

Selon un mode de réalisation, les moyens de gestion sont configurés pour programmer ou effacer les cellules-mémoires de l'un des deux sous-ensembles postérieurement à la lecture du groupe de données initiales, de façon à empêcher toute nouvelle génération du groupe de données initiales.

En effet ainsi tout nouvelle lecture différentielle des cellules-mémoires du premier ensemble fournira une valeur constante, bien entendu différente du groupe de données initiales générées.

On a donc détruit ici la source d'entropie à l'origine de la génération du groupe de données initiales.

Selon un mode de réalisation, le groupe de données initiales comporte G données initiales et les moyens de gestion comprennent un dispositif de mémoire non volatile comportant
- un plan mémoire comportant D zones mémoires, chaque zone mémoire étant configurée pour stocker une information comportant une succession de N données incluant les G données initiales, N étant supérieur ou égal à G, et
- des premiers moyens de traitement configurés pour extraire successivement les N données des D zones mémoires du moyen de mémoire et pour détruire au moins une partie du contenu de la zone mémoire correspondante lors de l'extraction des N données correspondantes.

Les D zones mémoires, qui contiennent chacune le groupe de données initiales (qui est une suite aléatoire de données), vont permettre les D délivrances successives du groupe de données de sortie à l'extérieur du dispositif.

Par ailleurs il est possible de ne stocker dans chaque zone mémoire que le groupe de données initiales. Dans ce cas N est égal à G et la succession de N données stockée dans chaque zone mémoire est la suite des G données initiales.

Cela étant il serait possible de prévoir N plus grand que G. Dans ce cas on complète par exemple les G données initiales par N-G bits factices (« dummy bits ») ayant par exemple tous la valeur 1, pour obtenir la succession des N données stockées dans la zone mémoire.

Chaque zone mémoire comporte également avantageusement des cellules-mémoires non volatiles avec transistor de sélection enterré.

Plus précisément, selon un mode de réalisation, chaque zone mémoire inclut une matrice de cellules mémoires ayant deux rangées et N colonnes.

Chaque cellule-mémoire comprend un transistor d'état ayant une grille de commande et une grille flottante, sélectionnable par un transistor de sélection vertical enterré dans un substrat et comportant une grille de sélection enterrée.

Chaque colonne de cellules-mémoires inclut une paire de cellules-mémoires jumelles.

Deux cellules-mémoires sont dites jumelles lorsque les deux transistors de sélection de cette paire de cellules-mémoires ont une grille de sélection commune.

Les premiers moyens de traitement sont configurés pour stocker dans la zone mémoire, ladite information comportant la succession de N bits.

Le stockage de ladite information est avantageusement effectué de sorte que, à l'exception du dernier bit de la succession,
- un bit courant de ladite succession de bits est stocké dans deux cellules-mémoires situées sur une même rangée et sur deux colonnes adjacentes, et
- un bit courant et le bit suivant sont respectivement stockés dans deux cellules jumelles.

Une telle structure à cellules jumelles combinée avec ce remplissage du type damier de la zone mémoire et un stockage redondant du bit courant dans deux cellules-mémoires, conduit à un stockage robuste de l'information et rend difficile la restitution de la valeur correcte des bits de l'information, et donc la valeur correcte des bits du groupe de données initiales, en particulier avec une méthode classique de lecture de ces cellules-mémoires.

A cet égard, afin d'assurer une lecture correcte d'un bit, les premiers moyens de traitement sont avantageusement configurés pour, afin de pouvoir lire un bit stocké dans une première cellule jumelle, remplacer au préalable le bit stocké dans la deuxième cellule-jumelle par un bit de référence ayant une valeur de référence choisie pour permettre une restitution correcte de la valeur du bit stocké dans la première cellule jumelle. Cette valeur de référence est par exemple la valeur logique 0 correspondant à un état programmé de la cellule-mémoire jumelle.

En effet puisque les deux cellules jumelles sont sélectionnées simultanément, il ne faut pas que la valeur du bit stocké dans la deuxième cellule jumelle « masque » éventuellement (par exemple si cette valeur est égale à 1) la valeur du bit stocké dans la première cellule jumelle.

Par ailleurs les premiers moyens de traitement sont en outre avantageusement configurés pour lire séquentiellement les N bits de l'information et, pour chaque bit de la succession à l'exception du dernier, remplacer un bit courant déjà lu de ladite information par le bit de référence, avant de pouvoir lire le bit suivant de ladite succession.

Une telle lecture avec remplacement de chaque bit déjà lu par le bit de référence, avant de pouvoir lire le bit suivant de l'information, revient à « détruire » les bits au fur et à mesure de leur lecture, à l'exception du dernier, et rend donc impossible une nouvelle restitution de l'information stockée, et par conséquent une nouvelle restitution du groupe de données initiales.

Chaque zone mémoire ne peut donc être lue qu'une seule fois pour ne délivrer l'information stockée qu'une seule fois.

En conséquence les D zones mémoires n'autoriseront que D restitutions du groupe de données initiales et donc D délivrances du code unique non prédictible.

Selon un mode de réalisation, la zone mémoire comporte une seule ligne de bits par colonne connectée aux drains des transistors d'état de la paire de cellules jumelles de la colonne correspondante, et une ligne de contrôle de grille, par rangée de cellules-mémoire, connectée à toutes les grilles de commande des transistors d'états des cellules-mémoires de la rangée correspondante.

Selon un mode de réalisation, les premiers moyens de traitement comprennent un décodeur colonne configuré pour sélectionner individuellement les deux lignes de bit associées aux deux colonnes situées aux deux extrémités de la zone mémoire et, pour sélectionner simultanément deux lignes de bits adjacentes, aussi bien pour l'opération de stockage de l'information que pour l'opération de lecture et de remplacement préalable des bits.

Un tel exemple non limitatif de décodeur colonne permet de mettre en œuvre le stockage et la lecture particuliers mentionnés ci-avant.

Les cellules mémoires des zones mémoires sont des cellules à une ligne de bit par colonne, alors que les autres cellules mémoires du dispositif sont des cellules mémoires à deux lignes de bits par colonne.

Alors qu'il serait possible de prévoir des décodeurs colonnes distincts pour chaque type d'architecture (simple ligne de bits ou double lignes de bits) il est particulièrement avantageux de prévoir une structure de décodeur colonne unique compatible avec les deux architectures. Ceci sera explicité plus en détails ci-après.

Dans une première variante, le groupe de données de sortie, c'est-à-dire le code unique non prédictible à usage limité délivré par le dispositif de fonction physiquement non clonable, peut simplement comprendre les N bits de ladite information stockée dans une zone mémoire.

Cela étant il est possible, afin de rendre le dispositif encore plus robuste aux attaques, de combiner les N bits de l'information stockée dans chaque zone mémoire avec un groupe de données supplémentaires générées par un deuxième module de fonction physiquement non clonable.

Ainsi, selon une autre variante, les moyens de gestion comprennent
- un deuxième module de fonction physiquement non clonable configuré pour générer un groupe de données supplémentaires, et
- des moyens d'élaboration configurés pour élaborer le groupe de données de sortie à partir d'au moins le groupe de données initiales et d'au moins le groupe de données supplémentaires.

Cela étant ce groupe de données supplémentaires peut aussi faire office à lui seul de code unique non prédictible, pouvant être utilisé par exemple comme clé de chiffrement/déchiffrement.

Le dispositif peut alors être en mesure de délivrer D fois un premier code unique non prédictible (le groupe de données de sortie) et de délivrer un très grand nombre non limité de fois, un deuxième code unique non prédictible (le groupe de de données supplémentaires).

Plus précisément, selon un mode de réalisation, les moyens de gestion sont configurés pour délivrer sur une deuxième interface de sortie du dispositif, (cette deuxième interface de sortie pouvant être identique ou différente de la première interface de sortie) le groupe de données supplémentaires.

Selon un mode de réalisation, le deuxième module de fonction physiquement non clonable comprend :
- un deuxième ensemble de cellules-mémoires non volatiles possédant chacune un transistor de sélection enterré dans un substrat semi-conducteur et un transistor d'état du type à appauvrissement ayant une grille de commande et une grille flottante électriquement connectées, les transistors d'état ayant des tensions de seuils effectives respectives appartenant à une distribution aléatoire commune, et
- des deuxièmes moyens de traitement configurés pour délivrer le groupe de données supplémentaires à partir d'une lecture des tensions de seuil effectives des transistors d'état des cellules-mémoires dudit deuxième ensemble.

Les cellules-mémoires non volatiles avec transistor de sélection enterré du deuxième ensemble sont là encore du type de celles décrites dans la demande de brevet US 2013/0 228 846.

Mais, ici, par rapport à ces cellules classiques, les transistors d'état des cellules-mémoires du deuxième ensemble sont du type à appauvrissement et ont une grille de commande et une grille flottante électriquement connectées.

Ces caractéristiques sont particulièrement avantageuses car, comme pour les cellules-mémoires du premier ensemble (c'est-à-dire celles du premier module de fonction physiquement non clonable), il est alors possible de lire une cellule-mémoire du deuxième ensemble en appliquant une tension nulle sur la grille de commande, par exemple en reliant cette grille de commande à la masse, car le transistor d'état est normalement passant.

En outre, puisque l'on a une tension nulle en lecture sur la grille de commande, on n'induit pas de contrainte lors de la lecture (« read stress ») dans le diélectrique de grille ce qui permet de réduire fortement, voire de supprimer, le risque d'apparition d'un phénomène connu par l'homme du métier sous le vocable anglosaxon de « disturb » en lecture (« read disturb ») pouvant se traduire par une modification de la valeur logique du bit stocké.

Ceci est particulièrement avantageux pour ces cellules-mémoires qui sont susceptibles d'être lues un nombre très important de fois.

Par ailleurs, le transistor d'état étant du type à appauvrissement, le caractère passant, (« normally on ») du transistor d'état lorsque la cellule-mémoire est par exemple dans un état vierge et qu'une tension nulle est appliquée sur la grille de commande, est lié à la valeur de la tension de seuil dans l'état vierge de cette cellule-mémoire qui peut par exemple être choisie négative ou sensiblement nulle.

A titre indicatif, cette tension de seuil peut être de l'ordre de -1 volts.

Là encore les transistors d'état de toutes les cellules-mémoires ont la même tension de seuil théorique. Mais, ce sont les tensions de seuil effectives, c'est-à-dire les valeurs réelles des tensions de seuil, qui varient légèrement suivant la dispersion aléatoire, par exemple due à des aléas physiques de fabrication.

Mais comme les grilles de commande et flottante des transistors d'état sont électriquement reliées, les transistors d'état présentent par nature une variabilité face à ces aléas plus importante et donc une distribution plus large que d'autres types de composants électroniques, par exemple des transistors MOS ou des résistances.

Ainsi ces cellules du deuxième ensemble offrent une très large dispersion des tensions de seuil effectives.

La dispersion obtenue des tensions de seuil effectives est par exemple égale à -1 volts plus ou moins 100%.

Et, la distribution aléatoire commune est avantageusement une distribution de tensions de seuil effectives de transistors d'état, à grilles flottante et de commande connectées, de cellules-mémoires vierges n'ayant jamais été écrites.

Avantageusement, chaque cellule-mémoire du deuxième ensemble comporte un oxyde de grille disposé entre la grille flottante du transistor d'état et le substrat, l'épaisseur de cet oxyde de grille étant supérieure à 8 nanomètres, par exemple comprise entre 8 et 10 nanomètres.

Un tel oxyde de grille épais permet d'obtenir une bonne robustesse du deuxième module de fonction physiquement non clonable vis-à-vis du vieillissement.

Selon un mode de réalisation, les deuxièmes moyens de traitement comportent des deuxièmes moyens de lecture configurés pour effectuer ladite lecture des tensions de seuil effectives des transistors d'état et le deuxième ensemble de cellules-mémoire non-volatiles est organisé en deux deuxièmes sous-ensembles matriciels disposés symétriquement par rapport aux moyens de lecture, toutes les lignes ou rangées des deux deuxièmes sous-ensembles matriciels étant parallèles.

Par ailleurs, les deuxièmes moyens de lecture sont configurés pour effectuer ladite lecture qui comporte alors des lectures différentielles des tensions de seuil effectives des transistors d'état des paires de cellules-mémoires symétriques et situées respectivement dans les deux deuxièmes sous-ensembles sur des colonnes homologues de ces deux deuxièmes sous-ensembles.

Là encore, deux colonnes homologues des deux deuxièmes sous-ensembles s'entendent comme étant des colonnes ayant la même adresse colonne.

D'une façon analogue à ce qui a été indiqué pour le premier ensemble, la répartition du deuxième ensemble en deux sous-ensembles matriciels symétriques associés à l'approche différentielle au niveau de la lecture, est particulièrement avantageuse en ce sens qu'elle permet d'augmenter la dispersion au sein de la distribution aléatoire commune des tensions de seuil effectives des transistors d'état.

Il est en outre particulièrement préférable de s'assurer de la fiabilité des cellules-mémoires du deuxième ensemble de façon à ne conserver pour la délivrance du groupe de données supplémentaires, que les paires de cellules-mémoire du deuxième ensemble dont le contenu est fiable c'est-à-dire non susceptible de varier d'une mise sous tension à une autre.

Aussi, selon un mode de réalisation, les deuxièmes moyens de traitement comportent avantageusement un troisième ensemble de cellules-mémoires possédant chacune un transistor de sélection enterré dans un substrat semiconducteur et un transistor d'état ayant une grille de commande et une grille flottante, les cellules-mémoires du troisième ensemble étant destinées à contenir des informations de fiabilité représentatives de la fiabilité ou de la non-fiabilité des contenus des paires de cellules-mémoire du deuxième ensemble.

A la différence des cellules-mémoire du deuxième ensemble, les cellules-mémoires du troisième ensemble qui sont destinées à contenir les informations de fiabilité, ne comportent pas de transistors d'état ayant leur grille flottante et leur grille de commande électriquement connectées. Par contre, ces transistors d'état sont également avantageusement du type à appauvrissement.

Ainsi tout comme il est possible (comme indiqué ci-avant) de lire une cellule-mémoire du deuxième ensemble en appliquant une tension nulle sur la grille de commande, par exemple en reliant cette grille de commande à la masse, car le transistor d'état est normalement passant, il est également possible de lire une cellule-mémoire du troisième ensemble en appliquant une tension nulle sur la grille de commande car le transistor d'état d'une telle cellule est également avantageusement normalement passant.

En d'autres termes, les cellules-mémoires du troisième ensemble sont des cellules-mémoires classiques à transistor d'état et à transistor de sélection enterré, par exemple du type de celles décrites dans la demande de brevet Etats Unis précédemment citée, mais avec par exemple un implant d'arsenic dans la région de canal de façon à obtenir des transistors d'état du type à appauvrissement.

Selon un mode de réalisation, le troisième ensemble comporte un agencement matriciel de cellules-mémoires partageant les mêmes colonnes que celles de l'agencement matriciel de cellules-mémoires du deuxième ensemble.

Ceci facilite ainsi le décodage car le deuxième ensemble et le troisième ensemble partagent alors le même décodage colonne.

Par ailleurs, il est avantageux en outre que le troisième ensemble comporte également deux troisièmes sous-ensembles respectivement répartis de part et d'autre des deuxièmes sous-ensembles.

Par ailleurs, les informations de fiabilité associées aux paires de cellules-mémoires sont stockées dans des cellules-mémoires du troisième ensemble situées sur les mêmes colonnes que celles sur lesquelles sont situées lesdites paires correspondantes de cellules-mémoires du deuxième ensemble.

Un tel stockage symétrique des informations de fiabilité de part et d'autre des deuxièmes sous-ensembles, permet une lecture plus facile.

Selon un mode de réalisation, les deuxièmes moyens de traitement comportent des premiers moyens de génération configurés pour générer lesdites informations de fiabilité en prenant en compte une valeur de marge sur les lectures différentielles des tensions de seuil effectives des transistors d'état des paires de cellules-mémoires du deuxième ensemble.

Selon un mode de réalisation, les deuxièmes moyens de traitement comprennent des deuxièmes moyens de génération configurés pour générer ledit groupe de données supplémentaires au moins à partir des lectures différentielles des tensions de seuil effectives des transistors d'état des paires de cellules-mémoires du deuxième ensemble, et desdites informations de fiabilité de ces paires de cellules-mémoires.

Comme indiqué ci-avant, selon un mode de réalisation, le premier ensemble de cellules-mémoire, le deuxième ensemble de cellules-mémoire et le troisième ensemble de cellules-mémoire possèdent chacun une architecture comportant deux lignes de bits par colonne de cellules-mémoires.

En d'autres termes, les colonnes de ces cellules-mémoire comportent des paires de cellules-mémoire jumelles, les deux transistors de sélection d'une paire de cellules-mémoire jumelles ayant une grille de sélection commune, deux cellules-mémoires adjacentes jumelles d'une même colonne n'étant pas reliées à la même ligne de bits et deux cellules-mémoires adjacentes non jumelles d'une même colonne étant reliées à la même ligne de bits.

Et selon un mode de réalisation, certaines colonnes du dispositif de mémoire non volatile (comportant les D zones mémoire) sont communes avec certaines colonnes des premier, deuxième et troisième ensembles.

Les moyens de gestion comportent alors avantageusement un décodeur colonne unique configuré pour sélectionner individuellement les deux lignes de bit associées aux deux colonnes situées aux deux extrémités de chaque zone mémoire et pour sélectionner simultanément deux lignes de bits adjacentes de chaque zone mémoire et une ligne de bit des premier, deuxième et troisième ensembles commune à l'une de ces deux bits adjacentes, et pour sélectionner individuellement les autres lignes de bits des premier, deuxième et troisième ensembles.

Comme indiqué ci-avant, une telle structure de décodeur colonne est compatible avec l'architecture à une ligne de bit par colonne du dispositif de mémoire non volatile et avec l'architecture à double ligne de bit par colonnes des ensembles de cellules-mémoires du premier et du deuxième modules de fonction physiquement non clonable.

Selon un autre aspect, il est proposé un procédé de génération automatique d'un code unique non prédictible à ladite première interface de sortie d'un dispositif de fonction physiquement non clonable tel que défini ci-avant, comprenant une mise sous tension du dispositif et au moins une lecture d'une zone mémoire du dispositif de mémoire non volatile.

Selon un mode de mise en œuvre, le procédé comprend en outre une lecture des tensions de seuil effectives des transistors d'état des cellules-mémoires dudit deuxième ensemble, les grilles de commande des transistors d'état de ces cellules-mémoires étant connectées à la masse lors de ladite lecture, et une élaboration du code unique non prédictible à partir du contenu de la zone mémoire lue et du groupe de données supplémentaires obtenu à partir de ladite lecture.

Selon un autre aspect, il est proposé un procédé de réalisation d'un dispositif de fonction physiquement non clonable tel que défini ci-avant, comprenant une réalisation du dispositif au sein d'un circuit intégré, et lors d'une phase de test du circuit intégré,
- une génération du groupe de données initiales,
- un stockage de ladite information de N données dans les D zones mémoire,
- une programmation ou un effacement d'une partie des cellules-mémoires du premier ensemble après la génération du groupe de données initiales,
- une génération et un stockage des informations de fiabilité.

D'autres avantages et caractéristiques de l'invention apparaîtront à l'examen de la description détaillée de modes de mise en œuvre et de réalisation, nullement limitatifs, et des dessins annexés sur lesquels :
[Fig 1]
[Fig 2]
[Fig 3]
[Fig 4]
[Fig 5]
[Fig 6]
[Fig 7]
[Fig 8]
[Fig 9]
[Fig 10]
[Fig 11]
[Fig 12]
[Fig 13]
[Fig 14]
[Fig 15]
[Fig 16]
[Fig 17]
[Fig 18]
[Fig 19]
[Fig 20]
[Fig 21]
[Fig 22]
[Fig 23]
[Fig 24]
[Fig 25]
[Fig 26]
[Fig 27]
[Fig 28]
[Fig 29]
[Fig 30]
[Fig 31]
[Fig 32]
[Fig 33]
[Fig 34]
[Fig 35]
[Fig 36]
[Fig 37], et
[Fig 38] illustrent schématiquement des modes de mise en œuvre et de réalisation de l'invention.

### Architecture générale du dispositif de fonction physiquement non clonable

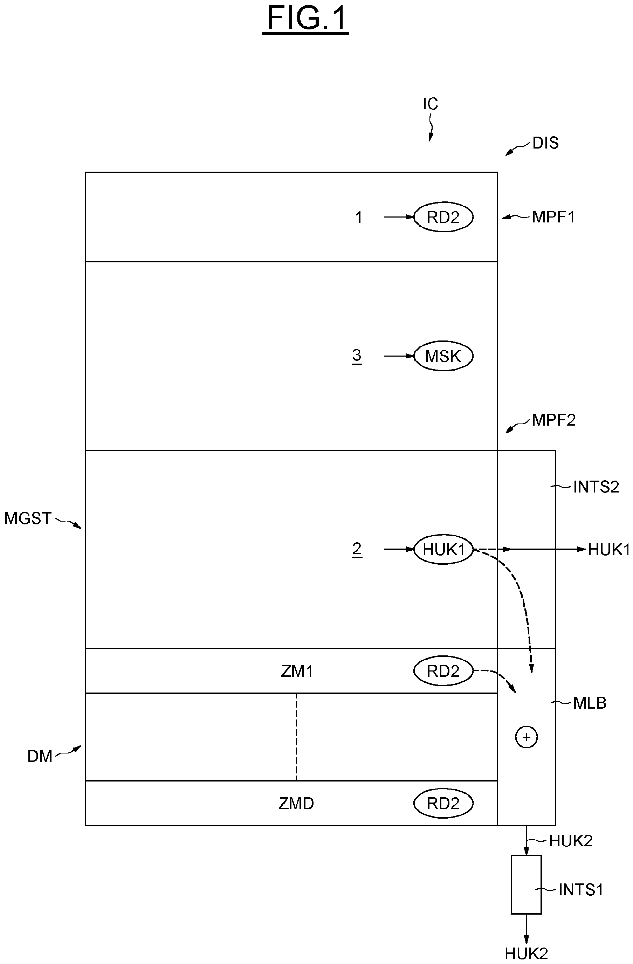

Avant de revenir plus en détails sur les différents constituants d'un dispositif de fonction physiquement non clonable, on va en décrire un exemple d'architecture générale et de fonctionnement en se référant aux figures 1 à 4.

Sur la figure 1, la référence DIS désigne un dispositif intégré de fonction physiquement non clonable, avantageusement entièrement réalisé au sein d'un même circuit intégré IC.

Le dispositif DIS comprend un premier module de fonction physiquement non clonable MPF1, interne au dispositif DIS, configuré pour générer un groupe de données initiales RD2, typiquement une suite de données binaires aléatoire formant un code initial unique non prédictible.

Comme on le verra plus en détails ci-après, le premier module MPF1 comporte un premier ensemble 1 de cellules-mémoires destiné à générer le code initial RD2.

Le dispositif DIS comprend également des moyens de gestion MGST, internes au dispositif DIS, configurés pour
- générer un groupe de données de sortie HUK2 à partir d'au moins le groupe de données initiales RD2,
- autoriser uniquement D délivrances successives du groupe de données de sortie HUK2 sur une première interface de sortie INST1 du dispositif, D étant un entier positif non nul, et
- empêcher toute nouvelle génération du groupe de données de sortie HUK2.

Ce groupe de données de sortie HUK2 forme un premier code unique non prédictible, utilisable par exemple comme clé de chiffrement/déchiffrement.

Ce premier code HUK2 est donc à usage limité car il ne peut être délivré que D fois.

Comme on le verra plus détails ci-après les moyens de gestion sont configurés pour empêcher toute nouvelle génération du groupe de données de sortie HUK2 en empêchant toute nouvelle génération du groupe de données initiales RD2.

Les moyens de gestion MGST comprennent un dispositif de mémoire non volatile DM possédant un plan mémoire comportant D zones mémoires ZM1-ZMD.

Chaque zone mémoire est capable de stocker N bits.

Dans l'exemple décrit ici, on suppose que le groupe de données initiales RD2 comporte également N bits.

Comme indiqué ci-avant, dans le cas où le groupe RD2 comporterait GM bits, avec G inférieur à N, il serait possible de compléter les G bits avec N-G bits factices.

Chaque zone mémoire ZMi est donc configurée ici pour stocker la succession de N données du code initial RD2.

Et comme on le verra plus en détails ci-après, le dispositif de mémoire DM comporte des premiers moyens de traitement (non représentés sur cette figure 1) configurés pour extraire successivement les N données du code RD2 des D zones mémoires du moyen de mémoire et pour détruire au moins une partie du contenu de la zone mémoire correspondante lors de l'extraction des N données correspondantes.

Alors qu'il serait possible que le premier code unique non prédictible HUK2 soit le code initial RD2, il est préférable pour améliorer la robustesse du dispositif DIS vis-à-vis d'attaques de tiers mal intentionnés, de combiner le code initial RD2 avec un groupe de données supplémentaires formant un deuxième code unique non prédictible HUK1.

A cet égard les moyens de gestion MGST comportent des moyens d'élaboration MLB, par exemple un circuit logique du type OU EXCLUSIF, élaborant le premier code HUK2 à partir du code initial RD2 et du deuxième code HUK1.

Les moyens de gestion MGST comportent également un deuxième module de fonction physiquement non clonable MPF2 configuré pour générer le deuxième code HUK1.

Comme on le verra plus en détails ci-après, le deuxième module comporte un deuxième ensemble 2 de cellules-mémoires destiné à générer le code HUK1 en utilisant des informations de fiabilité MSK contenues dans un troisième ensemble 3 de cellules-mémoires.

Il est également possible que le deuxième module MPF2 délivre le deuxième code HUK1 sur une deuxième interface de sortie INTS2 du dispositif, cette deuxième interface de sortie INTS2 pouvant être la première interface de sortie INTS1 ou bien une interface de sortie différente.

Le deuxième code HUK1 peut être par exemple utilisé comme clé de chiffrement/déchiffrement.

Le deuxième code HUK1 peut être un code à usage illimité.

### Fabrication et utilisation du dispositif de fonction physiquement non clonable

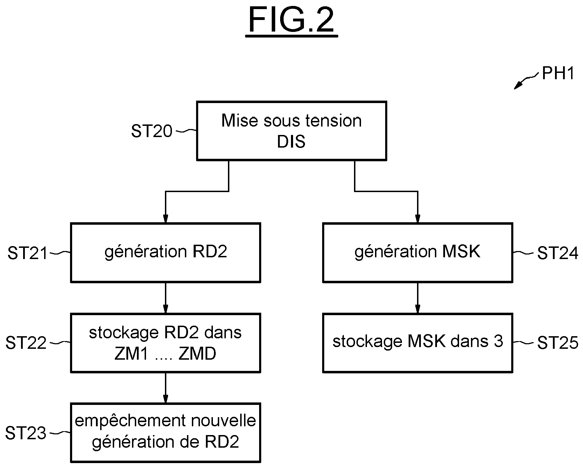

On se réfère maintenant plus particulièrement à la figure 2 pour illustrer un exemple de procédé de fabrication du dispositif de la figure 1, permettant son utilisation.

Les étapes mentionnées sur la figure 2 sont des étapes générales qui pour certaines d'entre elles, seront explicitées plus en détails ci-après.

Ces étapes font partie d'une première phase PH1 qui est typiquement une phase de test connue par l'homme du métier sous l'acronyme EWS (« Electrical Wafer Sorting »).

Une fois le circuit intégré incorporant le dispositif DIS réalisé, on met le dispositif DIS sous tension (étape ST20).

Puis on génère le code initial RD2 (étape ST21) que l'on stocke respectivement D fois dans les D zones mémoires ZM1-ZMD (étape ST23).

On empêche ensuite (étape ST23) toute nouvelle génération du code initial RD2.

Le nombre D est déterminé en fonction du nombre nécessaire d'utilisation du dispositif DIS lors du test fonctionnel du dispositif et du nombre maximum d'utilisation du dispositif par l'utilisateur final.

En effet après D délivrances du code HUK2 par le dispositif DIS ne sera plus en mesure de délivrer le code HUK2.

Outre les étapes qui viennent d'être mentionnées, le procédé comprend dans l'étape ST24, la génération des informations de fiabilité MSK et leur stockage dans l'ensemble 3 de cellules mémoires (étape ST25).

A l'issue de cette première phase PH1, le dispositif DIS est prêt à être utilisé.

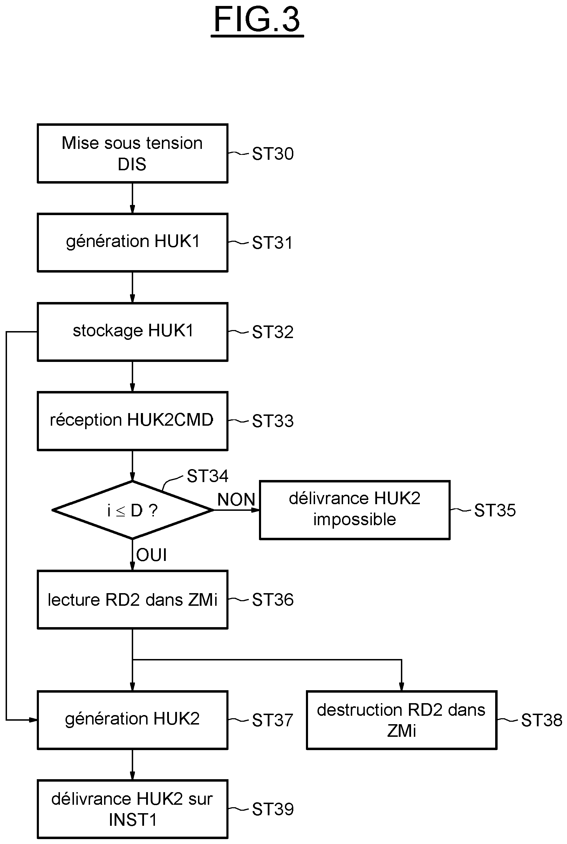

La figure 3 décrit un premier mode de mise en œuvre permettant la génération du code HUK2.

Après mise sous tension du dispositif DIS dans une étape ST30, le code HUK1 est généré (étape ST31).

Cette génération peut être déclenchée automatiquement ou bien en réponse à une commande interne générée par une unité de pilotage (logiciel ou machine d'états par exemple) interne au dispositif.

Le code HUK1 est ensuite stocké par exemple dans des registres internes (étape ST32).

A la réception dans l'étape ST33 d'une autre commande interne HUK2CMD, par exemple générée également par l'unité de pilotage, et si le code HUK2 n'a pas déjà été généré D fois (étape ST34), on passe à l'étape ST36 dans laquelle le code initial RD2 est lu dans l'une des zones mémoires ZMi encore disponible.

Si par contre le code HUK2 a déjà été généré D fois, alors une nouvelle génération et une nouvelle délivrance du code HUK2 est impossible (étape ST35).

Après la lecture dans l'étape ST36 du code initial RD2, le code HUK2 est généré dans l'étape ST37 à partir du code initial RD2 et du code HUK1 stocké.

Par ailleurs, comme on le verra plus en détails ci-après, la lecture du code initial RD2 dans la zone mémoire ZMi entraîne automatiquement sa destruction dans la zone mémoire ZMi (étape ST38).

Le code HUK2 est ensuite délivré sur la première interface de sortie INST1 du dispositif DIS.

Le code HUK2 est donc un code a usage limité car il ne peut être généré que D fois.

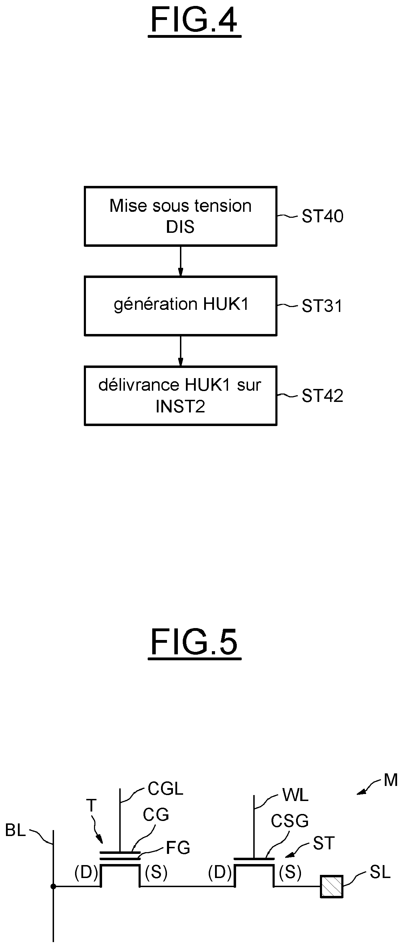

La figure 4 illustre un autre exemple d'utilisation du dispositif DIS.

Dans cet exemple, après mise sous tension du dispositif DIS dans l'étape ST40, le code HUK1 est généré dans l'étape ST41. Puis délivré sur l'interface de sortie INST2 (étape ST42).

Là encore cette génération de HUK1 peut être déclenchée automatiquement ou bien en réponse à une commande interne générée par l'unité de pilotage interne au dispositif.

Il est possible de répéter ces étapes un nombre illimité de fois.

La clé HUK1 n'est donc pas à usage limité.

On se réfère maintenant plus particulièrement aux figures 5 et suivantes pour décrire plus en détails certains constituants du dispositif DIS de la figure 1.

### Cellules-mémoires utilisées dans le dispositif de fonction physiquement non clonable

Comme indiqué ci-avant, le dispositif DIS comprend des zones mémoires ZMi et différents ensembles 1, 2 et 3 comportant des cellules-mémoire.

Ces cellules-mémoires sont des cellules non volatiles du type à grille divisée.

Sur la figure 5, la référence M désigne une telle cellule mémoire non volatile du type à grille divisée, par exemple du type à transistor de sélection ayant une grille verticale enterrée dans le substrat d'un circuit intégré.

Plus précisément, la cellule mémoire M comporte un transistor d'état T comportant une grille flottante FG surmontée par une grille de commande CG reliée à une ligne de contrôle de grille CGL.

Le drain (D) du transistor d'état T est relié à une ligne de bits BL tandis que la source (S) du transistor d'état T est reliée au drain d'un transistor de sélection ST.

Le transistor de sélection ST comporte une grille CSG reliée à une ligne de mots WL.

La source (S) du transistor de sélection ST est reliée à une ligne de source SL.

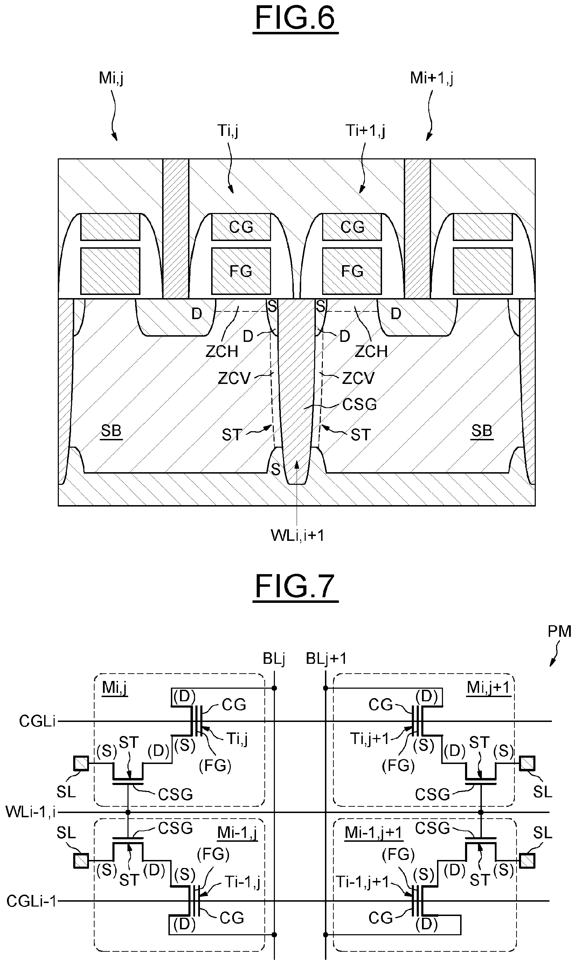

Comme illustré sur la figure 6, chaque transistor d'état d'une cellule-mémoire coopère avec le transistor de sélection ST qui est vertical et enterré dans le substrat SB.

Le canal ZCH du transistor d'état est référencé ZCH.

Les transistors de sélection ST connectés aux deux transistors d'états Ti,j et Ti+1,j ont chacun un canal vertical ZCV et une grille de sélection commune verticale enterrée CSG. Il convient de noter qu'à des fins de simplifications de la figure, le contact permettant de relier la grille commune enterrée CSG à la ligne de mots correspondante WLi,i+1, n'est pas représenté.

La figure 6 illustre plus précisément deux cellules jumelles Mi,j et Mi+1,j appartenant à la même colonne j et aux deux lignes i et i+1.

Le transistor d'état est ici un transistor d'état du type à appauvrissement (« depletion » en langue anglaise) comme décrit dans la demande brevet français publiée sous le n° 3049380.

Comme il est bien connu par l'homme du métier, le transistor MOS à appauvrissement est passant sans tension de commande appliquée sur la grille de commande du transistor d'état (grille de commande reliée à la masse), et par conséquent sur la grille flottante par couplage capacitif. Le transistor d'état est donc dit « normally on ». Par contre, le transistor devient de moins en moins conducteur au fur et à mesure de la tension de commande présente sur la grille de commande augmente en valeur absolue (devient de plus en plus négative) pour finalement se bloquer au-delà d'une tension de blocage.

Le canal ZCH du transistor d'état est avantageusement un canal surfacique de sorte qu'il puisse être possible de pouvoir bloquer la conduction du canal par application d'une tension de commande acceptable sur la grille de commande du transistor d'état.

L'énergie d'implantation des dopants définit la profondeur du canal ZCH. A titre indicatif, cette énergie peut être comprise entre 5keV et 100keV conduisant alors à une profondeur de canal de l'ordre de 100 nm.

Dans le cas d'un canal de type de conductivité N, les dopants implantés peuvent être par exemple de l'arsenic As, et la concentration de dopants détermine la tension de seuil VthO du transistor d'état d'une cellule mémoire à l'état vierge. Le transistor d'état est ici configuré pour avoir une telle tension de seuil VthO négative. A cet égard, on peut utiliser une dose de dopants implantés comprise entre 10¹² atomes/cm² et 10¹⁴ atomes/cm³.

Avec une telle dose de dopants on peut obtenir une tension VthO négative comprise par exemple entre -1 volt et -0,5 volt.

### Structures de plan mémoire utilisées dans la dispositif de fonction physiquement non clonable

Avec de telles cellules-mémoires, différentes structures de plan mémoire sont possibles, à savoir une structure à une seule ligne de bits par colonne ou une structure à deux (ou double) lignes de bits par colonne.

Le plan mémoire du dispositif de mémoire DM comportant les D zones mémoires ZMi présente une structure à une ligne de bits par colonne tandis que les ensembles 1, 2 et 3 présentent une structure à double lignes de bits par colonne.

### Structure de plan mémoire à une ligne de bits par colonne

A titre d'exemple, la figure 7 représente une structure de plan mémoire PM à une seule ligne de bits par colonne et comprenant des cellules mémoire Mi,j ; Mi,j+1 _{;} Mi-1,j ; Mi-1,j+1 du type décrit dans la demande de brevet US 2013/0228846.

Les cellules mémoire Mi,j et Mi,j+1 de rang "i" appartiennent à la ligne ou rangée de rang i du plan mémoire et sont reliées à une ligne de mot WLi-1,i et à une ligne de contrôle de grille CGLi.

Les cellules mémoire Mi-1,j et Mi-1,j+1 de rang "i-1" appartiennent à la ligne ou rangée de rang "i-1" du plan mémoire et sont reliées à la ligne de mot WLi-1,i et à une ligne de contrôle de grille CGLi-1.

Les cellules mémoire Mi,j et Mi-1,j de rang "j" appartenant à la colonne j sont accessibles en lecture et écriture par l'intermédiaire d'une seule ligne de bit BLj et les cellules mémoire Mi,j+1 et Mi-1,j+1 de rang "j-1" sont accessibles en lecture et écriture par l'intermédiaire d'une seule ligne de bit BLj+1.

Chaque cellule mémoire comporte un transistor à grille flottante FG, respectivement Ti,j ; Ti,j+1 _{;} Ti-1,j ; Ti-1,j+1. Les régions de drain (D) des transistors Ti,j et Ti-1,j sont connectées à la ligne de bit BLj et les bornes de drain des transistors Ti,j+1 et Ti-1,j+1 sont connectées à la ligne de bit BLj+1. Les grilles de commande CG des transistors Ti,j et Ti,j+1 sont connectées à la ligne de contrôle de grille CGLi et les grilles de commande CG des transistors à grille flottante Ti-1,j et Ti-1,j+1 sont connectées à la ligne de contrôle de grille CGLi-1.

Chaque transistor à grille flottante a sa borne de source (S) reliée à une ligne de source SL par l'intermédiaire du transistor de sélection ST. Les transistors de sélection ST des cellules mémoire Mi,j et Mi-1,j ont une grille de sélection commune CSG et les deux cellules mémoire sont, de ce fait, dites "jumelles". De même, des cellules mémoire Mi,j+1 et Mi-1,j+1 sont des cellules mémoire jumelles et leurs transistors de sélection ST ont une grille de sélection commune CSG.

Chaque grille de sélection CSG est une grille verticale enterrée dans un substrat dans lequel le plan mémoire PM est réalisé, la ligne de source SL étant également enterrée. Ces grilles de sélection communes CSG de cellules mémoire jumelles, sont connectées à la ligne de mot WLi-1,i.

### Structure de plan mémoire à deux lignes de bits par colonne

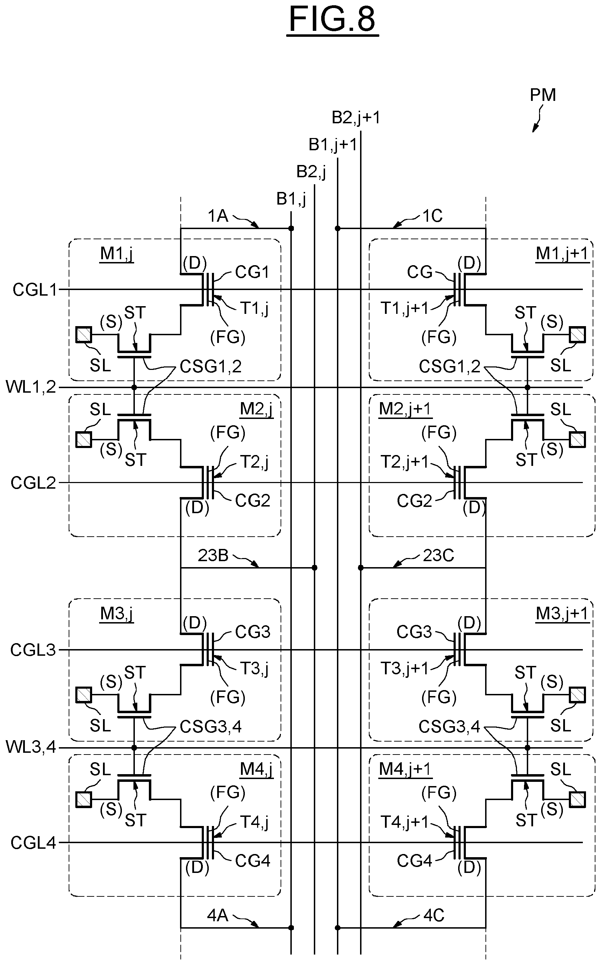

La figure 8 illustre une structure de plan mémoire et de cellules-mémoires jumelles dite à « double lignes de bits » (deux lignes de bits par colonne).

Le plan mémoire PM comprend des rangées et des colonnes de cellules mémoire, huit cellules mémoire C1,j, C2,j, C3,j, C4,j, C1,j+1, C2,j+1, C3,j+1, C4,j+1 étant représentées ici. Chaque cellule-mémoire comporte un transistor d'état, respectivement référencés T1,j, T2,j, T3,j, T4,j, T1,j+1, T2,j+1, T3,j+1, T4,j+1, et un transistor de sélection ST connecté entre un plan de source SL et le transistor d'état.

Les cellules-mémoires C1,j, C2,j, C3,j, C4,j appartiennent à une colonne de rang j et les cellules-mémoires C1,j+1, C2,j+1, C3,j+1, C4,j+1 appartiennent à une colonne adjacente de rang j+1. Les cellules-mémoires C1,j, C1,j+1 appartiennent à une première rangée de cellules-mémoires, et leurs transistors d'états T1,j, T1,j+1 ont des grilles de commande CG1 connectées à une ligne de contrôle de grille commune CGL1. Les cellules-mémoires C2,j, C2,j+1 appartiennent à une deuxième rangée de cellules-mémoires, et leurs transistors d'états T2,j, T2,j+1 ont des grilles de commande CG2 connectées à une ligne de contrôle de grille commune CGL2. Les cellules-mémoires C3,j, C3,j+1 appartiennent à une troisième rangée de cellules-mémoires, et leurs transistors d'états T3,j, T3,j+1 ont des grilles de commande CG3 connectées à une ligne de contrôle de grille commune CGL3. Les cellules-mémoires C4,j, C4,j+1 appartiennent à une quatrième rangée de cellules-mémoires et leurs transistors d'états T4,j, T4,j+1 ont des grilles de commande CG4 connectées à une ligne de contrôle de grille commune CGL4.

Dans la colonne de rang j, les cellules-mémoires C1,j, C2,j sont des cellules-mémoires jumelles et leur transistors de sélection ST comportent une grille de sélection commune CSG1,2 reliée à une ligne de mot commune WL1,2.

De même, les cellules-mémoires C3,j, C4,j sont des cellules-mémoires jumelles et leur transistors de sélection ST comportent une grille de sélection commune CSG3,4 reliée à une ligne de mot commune WL3,4.

Dans la colonne de rang j+1, les cellules-mémoires C1,j+1, C2,j+1 sont des cellules-mémoires jumelles et leur transistors de sélection ST comportent une grille de sélection commune CSG1,2 reliée à la ligne de mot WL1,2.

Les cellules-mémoires C3,j+1, C4,j+1 sont des cellules-mémoires jumelles et leur transistors de sélection ST comportent une grille de sélection commune CSG3,4 reliée à la ligne de mot commune WL3,4.

Les grilles de sélection communes CSG1,2 ou CSG3,4 des paires de cellules-mémoires jumelles sont des grilles verticales enterrées réalisées sous forme de tranchées conductrices pratiquées dans le substrat, et les bornes de source (S) des transistors de sélection ST sont reliées au plan de source enterré SL, s'étendant sous de la région du substrat où les cellules-mémoires sont implantées.

Le plan mémoire PM comprend deux lignes de bit par colonne de cellules-mémoires. Ainsi, deux lignes de bit B1,j, B2,j sont attribuées aux cellules-mémoires de la colonne de rang j, et deux lignes de bit B1,j+1, B2,j+1 sont attribuées aux cellules-mémoires de la colonne de rang j+1.

Deux cellules-mémoires jumelles sont reliées à des lignes de bit différentes parmi les deux lignes de bit attribuées à la colonne dans laquelle elles se trouvent, tandis que deux cellules-mémoires adjacentes mais non jumelles sont reliées à la même ligne de bit.

Ainsi, dans la colonne de rang j :
- la borne de drain (D) du transistor d'état T1,j est reliée à la ligne de bit B1,j par l'intermédiaire d'un chemin conducteur 1A,
- la borne de drain du transistor d'état T2,j est reliée à la ligne de bit B2,j par l'intermédiaire d'un chemin conducteur 23B,
- la borne de drain du transistor d'état T3,j est reliée à la ligne de bit B2,j par l'intermédiaire du chemin conducteur 23B (la cellule mémoire C2,j étant adjacente mais non jumelle à la cellule mémoire C3,j), et
- la borne de drain du transistor d'état T4,j est reliée à la ligne de bit B1,j par l'intermédiaire d'un chemin conducteur 4A.

Dans la colonne de rang j+1 :
- la borne de drain du transistor d'état T1,j+1 est reliée à la ligne de bit B1,j+1 par l'intermédiaire d'un chemin conducteur 1C,
- la borne de drain du transistor d'état T2,j+1 est reliée à la ligne de bit B2,j+1 par l'intermédiaire d'un chemin conducteur 23D,
- la borne de drain du transistor d'état T3,j+1 est reliée à la ligne de bit B2,j+1 par l'intermédiaire du chemin conducteur 23D (la cellule mémoire C2,j+1 étant adjacente mais non jumelle à la cellule mémoire C3,j+1), et
- la borne de drain du transistor d'état T4,j+1 est reliée à la ligne de bit B1,j+1 par l'intermédiaire d'un chemin conducteur 4C.

### Les décodeurs colonne et ligne

Comme on le verra ci-après, les différents constituants du dispositif DIS utilisent des décodeurs colonne et ligne pour sélectionner les cellules-mémoire.

Il est possible d'utiliser des décodeurs colonnes spécifiques pour chaque constituant. Certains de ces décodeurs peuvent avoir une structure classique. Le décodeur colonne associé au dispositif DM de mémoire non volatile présente une structure spécifique.

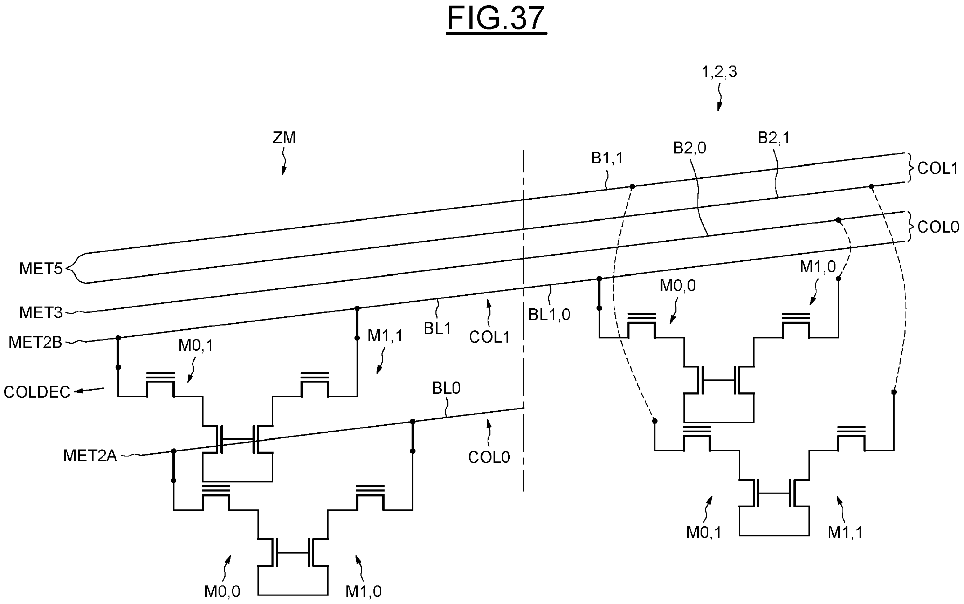

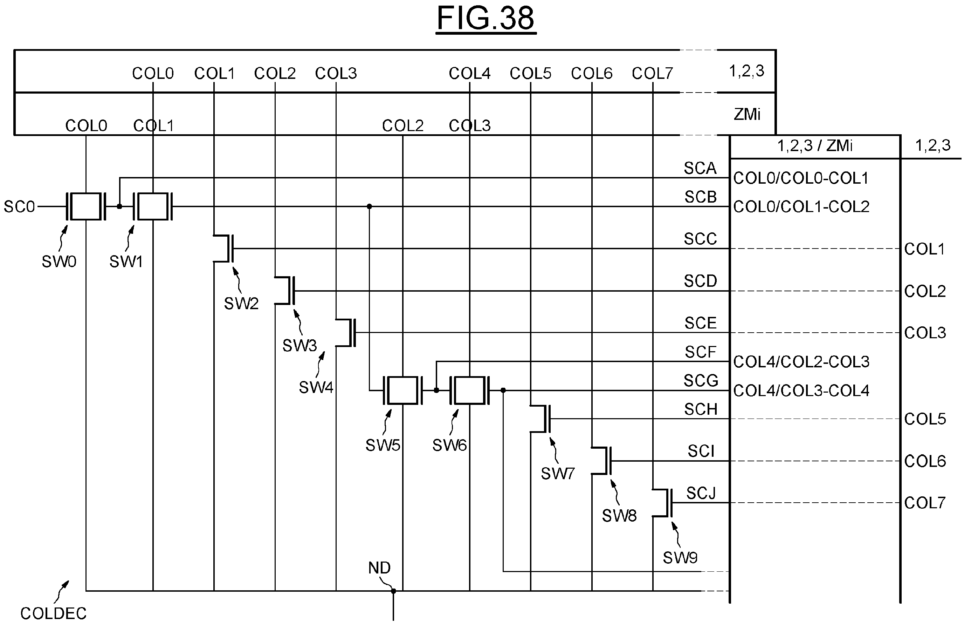

Cela étant comme on le verra plus en détails à la fin de la description en référence aux figures 37 et 38 , il est particulièrement avantageux de prévoir un décodeur colonne unique capable d'adresser les différents plans mémoire.

Ceci permet de simplifier l'architecture globale du dispositif et de réduire l'encombrement sur silicium.

Les décodeurs ligne sont quant à eux de structure classique.

### Le premier module de fonction physiquement non clonable MPF1 et son fonctionnement

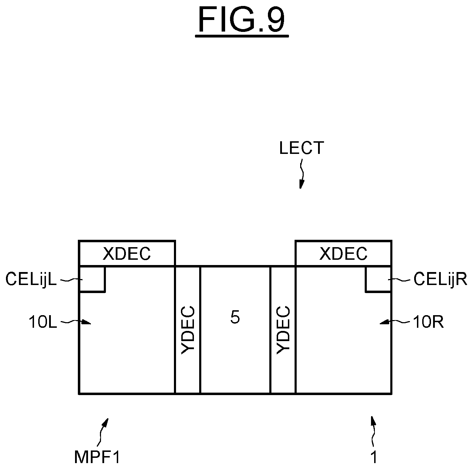

On se réfère maintenant plus particulièrement aux figures 9 à 11 pour décrire plus en détails un exemple de réalisation du premier module MPF1 de fonction physiquement non clonable destiné à générer le code initial non prédictible RD2.

Comme indiqué ci-avant, le premier module MPF1 comporte un premier ensemble de cellules-mémoires.

Chaque cellule-mémoire a les caractéristiques décrites en référence à la figure 6.

Le transistor d'état étant du type à appauvrissement (« depletion » en langue anglaise), le caractère normalement passant (« normally on ») du transistor d'état lorsque la cellule-mémoire est dans un état vierge et qu'une tension nulle est appliquée sur la grille de commande est lié à la valeur de sa tension de seuil dans l'état vierge de la cellule-mémoire qui peut être choisie négative ou sensiblement nulle.

Le transistor d'état d'une cellule-mémoire à l'état vierge est ici configuré pour avoir une telle tension de seuil négative par exemple de l'ordre de -1 volts.

Toutes les cellules-mémoires de ce premier ensemble 1 sont à l'état vierge.

Tous les transistors d'état de toutes les cellules du premier ensemble 1 sont destinés à présenter la même tension de seuil.

Cela étant, les tensions de seuil effectives, c'est-à-dire les valeurs réelles des tensions de seuil, varient légèrement suivant une dispersion aléatoire, par exemple due à des aléas physiques de fabrication. Ce type de dispersion est habituel et connu en soi.

Ainsi, les transistors des cellules du premier ensemble 1 présentent chacun une tension de seuil effective appartenant à une distribution aléatoire commune.

Et cette distribution aléatoire commune est ici une distribution de tensions de seuil de transistors de cellules-mémoires à l'état vierge n'ayant jamais été écrites.

Si l'on se réfère maintenant plus particulièrement à la figure 9, on voit que dans ce mode de réalisation avantageux, le premier ensemble 1 de cellules-mémoire non volatiles CEL est organisé en deux premiers sous-ensembles matriciels 10L et 10R disposés symétriquement par rapport à des moyens de lecture LECT de structure classique et connue en soi, comportant typiquement des amplificateurs de lecture (« sense amplifiers ») 5.

Toutes les lignes ou rangées des deux premiers sous-ensembles matriciels 10L et 10R sont parallèles.

Le décodage ligne de chacun de ces deux sous-ensembles 10L, 10R est effectué par des décodeurs lignes XDEC de structure classique et connue en soi tandis que le décodage colonnes de ces deux premiers sous-ensembles est effectué par deux décodeurs colonnes YDEC, également de structure classique et connue en soi, disposés symétriquement par rapport aux amplificateurs de lecture 5.

Et, ces moyens de lecture LECT sont configurés pour effectuer des lectures différentielles des tensions de seuil effectives des transistors d'état des paires de cellules-mémoire symétriques CELijL et CELijR situées respectivement dans les deux premiers sous-ensembles 10L et 10R sur des colonnes homologues de ces deux premiers sous-ensembles.

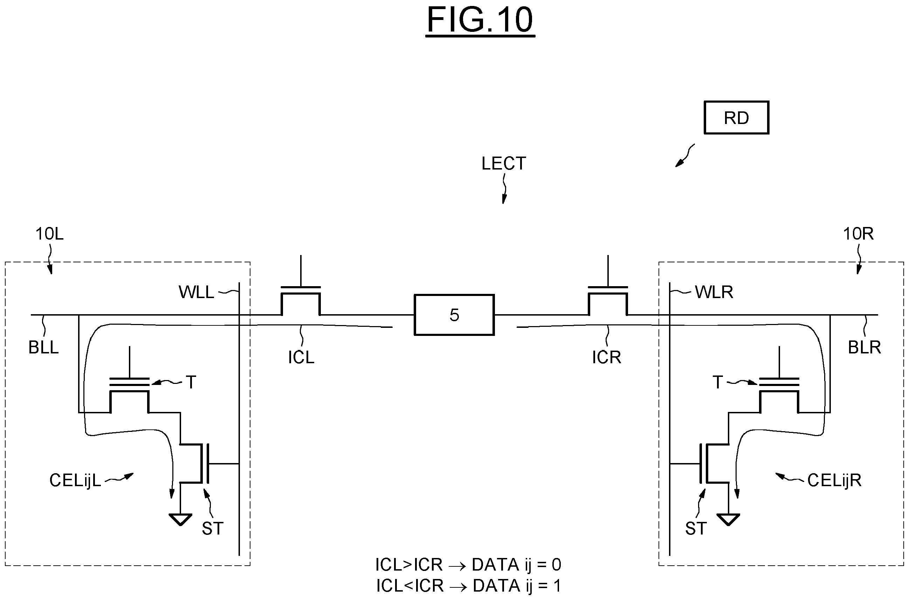

On se réfère maintenant plus particulièrement à la figure 10 pour décrire une lecture différentielle RD effectuée par des moyens de lecture LECT incorporant les amplificateurs de lecture 5.

Dans l'exemple illustré sur la figure 10, les moyens de lecture LECT sont configurés pour mesurer la différence entre les tensions de seuil effectives de la paire de transistors d'état T appartenant respectivement aux deux cellules-mémoire CELijL et CELijR.

Les moyens de lecture sont couplés aux transistors T via les lignes de bits respectives BLL et BLR.

Les transistors de sélection ST sont commandés sur leur grille par des signaux véhiculés sur les lignes de mots respectives WLL et WLR.

Une lecture différentielle RD telle que celle illustrée sur la figure 10 est avantageusement effectuée avec les grilles de commande des transistors d'état connectées à la masse.

L'amplificateur de lecture 5 est configuré pour amplifier une différence entre le courant ICL écoulé dans la cellule CELijL et le courant ICR écoulé dans la cellule CELijR.

Ces courants de lecture ICL et ICR étant représentatifs des tensions de seuil effectives des transistors à grille flottante des cellules respectives CELijL et CELijR, la différence de ces courants est représentative de la différence entre les tensions de seuil effectives de ces transistors d'état.

Ainsi, les moyens de lecture LECT sont capables de mesurer la différence entre les tensions de seuil effectives des paires de transistors d'état de deux cellules disposées sur des lignes de bits homologues.

Et, à titre d'exemple non limitatif, on peut décider que si le courant ICL est supérieur au courant ICR, alors la donnée DATAij contenue dans cette paire de cellules a une valeur logique 0 tandis que si le courant ICL est inférieur au courant ICR, alors cette donnée a une valeur logique 1.

Bien entendu, on aurait pu adopter la convention inverse.

Ainsi la lecture différentielle RD des cellules-mémoires du premier ensemble 1 fournit le code initial RD2.

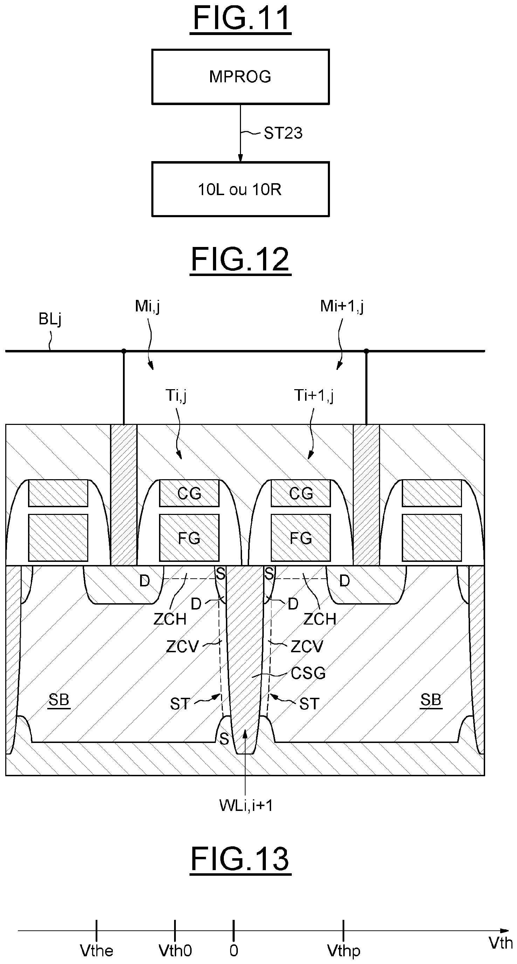

Une fois ce code RD2 généré, on le détruit par exemple comme illustré sur la figure 11.

Plus précisément les moyens de gestion peuvent comporter à cet égard des moyens de programmation MPROG de structure classique, configurés pour programmer les cellules-mémoires du premier sous-ensemble 10L ou bien celles du deuxième sous-ensemble 10R.

Ainsi une lecture différentielle ultérieure des cellules de ce premier ensemble fournira une suite de valeurs constantes.

En variante, il serait possible de remplacer les moyens de programmation par des moyens d'effacement de structure classique configurés pour effacer les cellules-mémoires du premier sous-ensemble 10L ou bien celles du deuxième sous-ensemble 10R.

### Le dispositif de mémoire non volatile DM et son fonctionnement

On se réfère maintenant plus particulièrement aux figures 12 à 27 pour décrire plus en détails un exemple de structure du dispositif de mémoire non volatile DM et son fonctionnement.

Un tel exemple est décrit dans la demande de brevet français déposée au nom de la Demanderesse le même jour que le présente demande et ayant pour titre : « Dispositif de mémoire non volatile lisible uniquement un nombre prédéterminé de fois».

Le contenu de cette autre demande de brevet est à toutes fins utiles incorporée par référence dans la présente demande de brevet.

On en rappelle ici certaines caractéristiques.

La structure de plan mémoire PM du dispositif de mémoire DM est une structure à une seule ligne de bits par colonne telle que décrite à la figure 7.

La figure 12 illustre plus précisément deux cellules jumelles Mi,j et Mi+1,j appartenant à la même colonne j et aux deux lignes i et i+1.

Leur drain est connecté à la même ligne de bits BLj qui est la seule ligne de bits pour la colonne j.

Chaque cellule-mémoire a les caractéristiques décrites en référence à la figure 6.

Chaque cellule-mémoire a un premier état, par exemple un état effacé, dans lequel elle stocke un bit ayant une première valeur logique, par exemple la valeur logique 1, et un deuxième état, par exemple un état programmé, dans lequel elle stocke un bit ayant une deuxième valeur logique, par exemple la valeur logique 0.

Le transistor d'état d'une cellule-mémoire est avantageusement configuré pour être passant lorsque la cellule-mémoire est dans son premier état et pour être bloqué lorsque la cellule-mémoire est dans son deuxième état.

Sur la figure 13, on a représenté schématiquement les différentes tensions de seuil Vthe, VthO et Vthp correspondant respectivement par exemple à des cellules-mémoires effacées, vierges et programmées.

En mode de lecture, on peut appliquer une tension de lecture nulle sur la grille de commande CG du transistor d'état et appliquer une tension positive sur la ligne de bits BL.

Le transistor d'état étant à appauvrissement avec une tension VthO négative, il est normalement passant pour une cellule mémoire vierge, c'est-à-dire lorsqu'aucune charge n'est présente dans la grille flottante.

Il ressort alors de la figure 13 qu'un transistor d'état d'une cellule mémoire effacée sera passant tandis que le transistor d'état d'une cellule mémoire programmée sera bloqué. Et, le fait d'appliquer une tension nulle sur la grille de commande et par conséquent sur la grille flottante FG du transistor d'état, n'induit pas de stress en lecture (« read stress »).

Par ailleurs la programmation ou l'effacement d'un transistor à grille flottante s'effectue ici par l'injection ou l'extraction des charges électriques dans la grille du transistor par injection d'électrons chauds au moyen de haute(s) tension(s).

Plus particulièrement, l'effacement d'une cellule mémoire est assuré en combinant une tension positive appliquée au substrat à une tension négative appliquée à la grille de commande de son transistor d'état à grille flottante.

En ce qui concerne la cellule jumelle, si l'on souhaite qu'elle ne soit pas simultanément effacée, on applique une tension positive sur la grille de commande de son transistor d'état.

La programmation d'une cellule mémoire peut être assurée par exemple en appliquant une tension positive à la ligne de bit concernée, en appliquant une tension nulle au substrat, et une tension positive sur la grille de commande de son transistor d'état à grille flottante.

La sélection d'une telle cellule mémoire à programmer s'effectue en appliquant une tension positive supérieure à la tension de seuil du transistor d'état, sur la ligne de mot concernée.

En ce qui concerne la cellule jumelle, si l'on souhaite qu'elle ne soit pas simultanément programmée, on applique une tension faiblement négative, par exemple -0,5 Volt ou -1 Volt, ou nulle sur la grille de commande de son transistor d'état.

Enfin, comme indiqué ci-avant, la lecture d'une cellule mémoire est assurée en appliquant une tension nulle à la grille de commande CG de son transistor d'état, ainsi qu'une tension positive à la ligne de bit correspondante.

La sélection d'une telle cellule mémoire à lire s'effectue en appliquant une tension positive supérieure à la tension de seuil du transistor d'état, sur la ligne de mot concernée.

En pratique on appliquera en mode lecture une tension nulle sur toutes les cellules du plan mémoire.

De ce fait deux cellules jumelles sélectionnées seront simultanément lues.

Et si en plus le décodeur colonne est configuré, comme on le verra plus en détails ci-après, pour sélectionner simultanément deux lignes de bits adjacentes, les deux paires correspondantes de cellules jumelles seront simultanément lues.

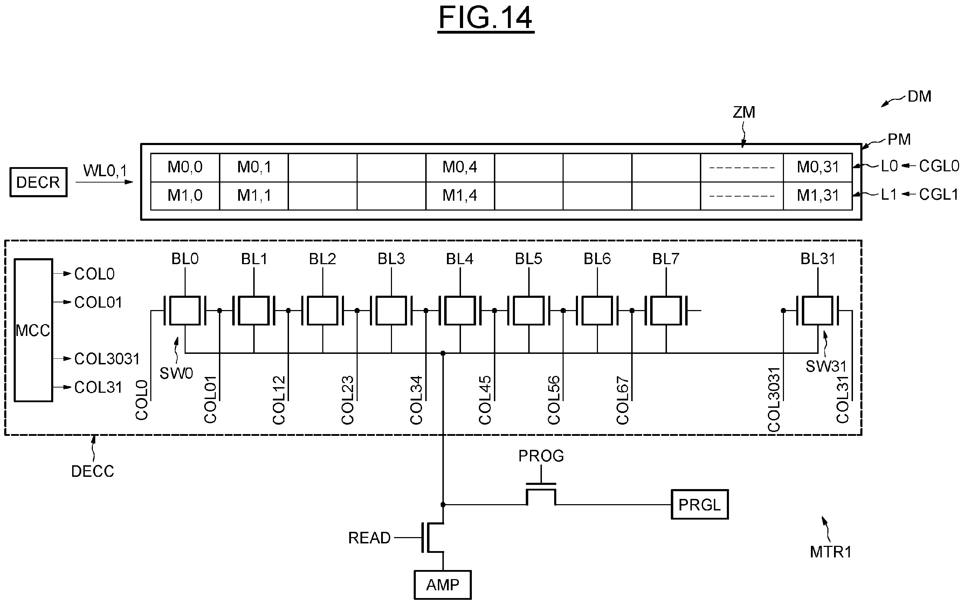

On se réfère maintenant plus particulièrement aux figures 14 à 27 pour décrire plus précisément des modes de réalisation et de mise en œuvre du dispositif de mémoire DM.

Sur la figure 14, à des fins de simplification, on n'a représenté qu'une seule zone mémoire ZM et on ne décrira uniquement le fonctionnement de cette zone mémoire, étant bien entendu que la structure et le fonctionnement des D zones mémoires ZM1-ZMD du dispositif de mémoire DM sont identiques.

Cette zone mémoire ZM contient ici une matrice de cellules-mémoire Mi,j ayant deux rangées ou lignes L0 et L1 et N colonnes, ici 32 colonnes.

Dans cet exemple, i désigne l'indice de rangée ou ligne et i vaut 0 ou 1.

L'indice j désigne l'indice de colonne et varie de 0 à 31 dans cet exemple.

La zone mémoire ZM est destinée à stocker une information comportant N données binaires D0-D31.

On considère ici que les N données binaires D0-D31 sont celles du code initial RD2 généré par le premier module MPF1.

Le dispositif de mémoire DM comporte également des premiers moyens de traitement MTR1 comportant notamment un décodeur lignes DECR, de structure classique, et configuré pour délivrer des tensions sur la ligne de mots WL0,1 ainsi que sur les lignes de contrôle de grille CGL0 et CGL1.

Les moyens de traitement comportent également un décodeur colonnes DECC.

Ce décodeur colonnes DECC comporte ici un ensemble de commutateurs SW0-SW31 comportant chacun deux transistors MOS en parallèle.

Une première borne du commutateur SWj est connectée à la ligne de bits correspondante BLj.

Une deuxième borne du commutateur SWJ est connectée soit à un circuit amplificateur de lecture AMP par l'intermédiaire d'un transistor MOS commandé sur sa grille par un signal de lecture READ ou bien à un moyen de programmation PRGL, de structure classique, par l'intermédiaire d'un autre transistor MOS commandé sur sa grille par un signal de commande de programmation PROG.

Ces signaux READ et PROG sont délivrés par les premiers moyens de traitement MTR1 selon que l'on se situe dans une phase de lecture ou dans une phase de programmation.

Comme illustré sur la figure 14, le décodeur colonnes DECC est configuré pour sélectionner individuellement les deux lignes de bits BL0 et BL31 associées aux deux colonnes situées aux deux extrémités de la zone mémoire ZM, par l'intermédiaire des signaux logiques COLO et COL31.

Par ailleurs, le décodeur colonnes est également configuré pour sélectionner simultanément deux lignes de bits adjacentes BLj et BLj+1 par le signal logique COLjj+1.

Cette sélection individuelle des deux lignes de bits BL0 et BL31 et la sélection simultanée de deux lignes de bits adjacentes est effectuée aussi bien pour l'opération de stockage de l'information D0-D31 dans les cellules-mémoire de la zone mémoire ZM que pour l'opération de lecture qui, comme on le verra plus en détail ci-après, comporte des remplacements préalables de bits par un bit de référence, en l'espèce un bit de valeur logique 0.

Les signaux logiques COLO, COL31 et COL jj+1 sont délivrés par des moyens logique MCC.

Comme indiqué ci-avant, la zone mémoire est destinée à stocker 32 bits de données D0-D31 du code RD2.

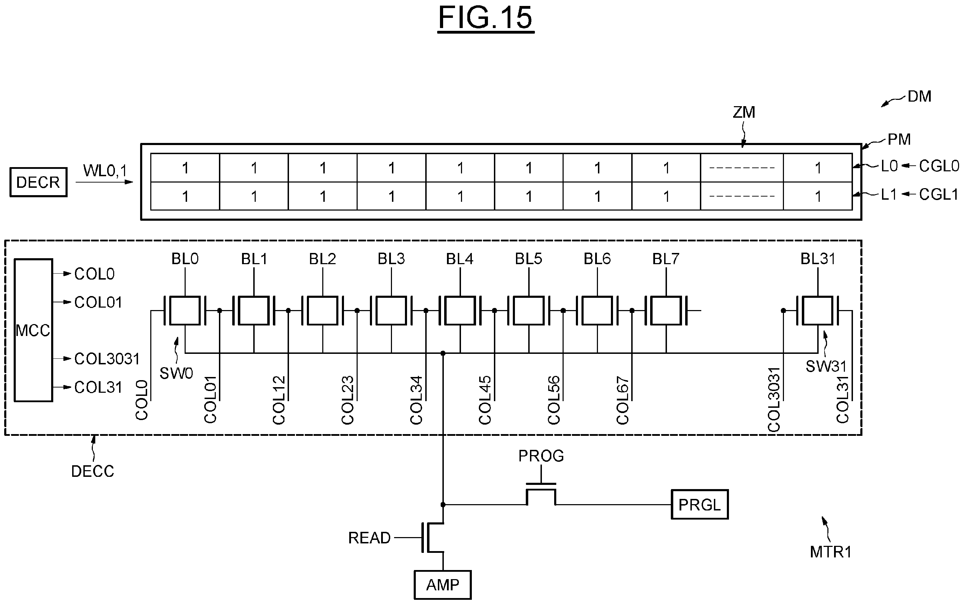

Et, comme illustré sur la figure 15, préalablement au stockage de cette information (code RD2) dans la zone mémoire ZM, toutes les cellules-mémoire de la zone mémoire ZM sont dans un état effacé, c'est-à-dire qu'elles contiennent toutes la valeur logique 1.

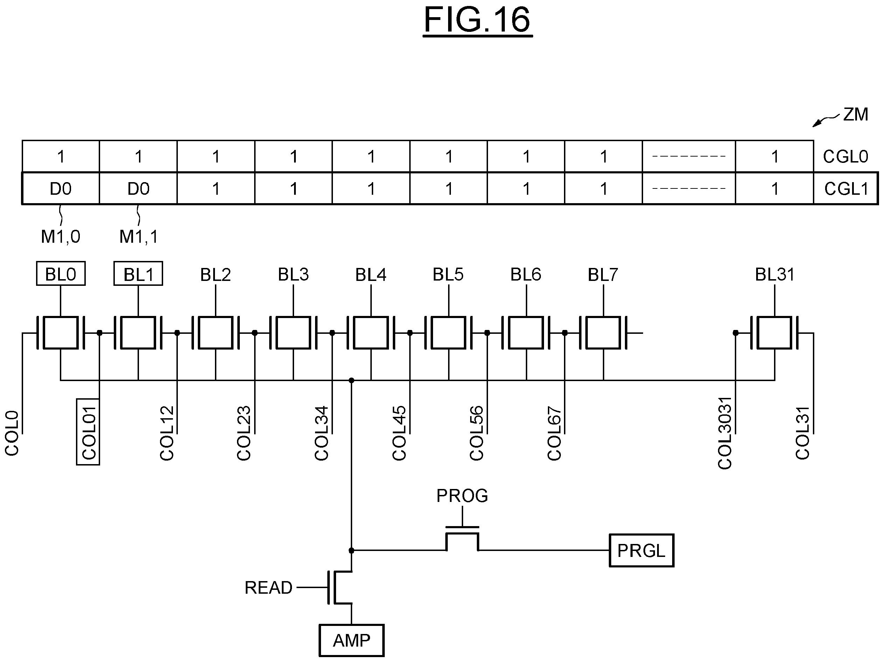

On se réfère maintenant plus particulièrement aux figures 16 à 19 pour illustrer l'écriture successive des N bits D0-D31 de l'information (code RD2) dans la zone mémoire ZM.

D'une façon générale, puisque l'état initial des cellules-mémoire de la zone mémoire ZM est un état effacé, c'est-à-dire contenant un « 1 » logique, on n'effectuera aucune opération dans une cellule mémoire pour y écrire une donnée ayant comme valeur logique « 1 ».

Par contre, on effectuera une opération de programmation d'une cellule mémoire dans le cas où la donnée à écrire dans cette cellule est un « 0 ».

Les tensions à appliquer sur la ligne de bits, le substrat, la grille de commande et la ligne de mots pour sélectionner et programmer une cellule ont été indiquées ci-avant.

De même les tensions à appliquer sur la ligne de bits, la grille de commande et la ligne de mots pour sélectionner et lire une cellule ont été indiquées ci-avant.

Sur la figure 16, le décodeur colonnes DECC sélectionne, à l'aide du signal logique COL1, les deux lignes de bits BL0 et BL1.

Par ailleurs, la ligne de contrôle de grille CGL1 est sélectionnée.

De ce fait, la donnée D0 est écrite à la fois dans la cellule-mémoire M1,0 et dans la cellule-mémoire M1,1.

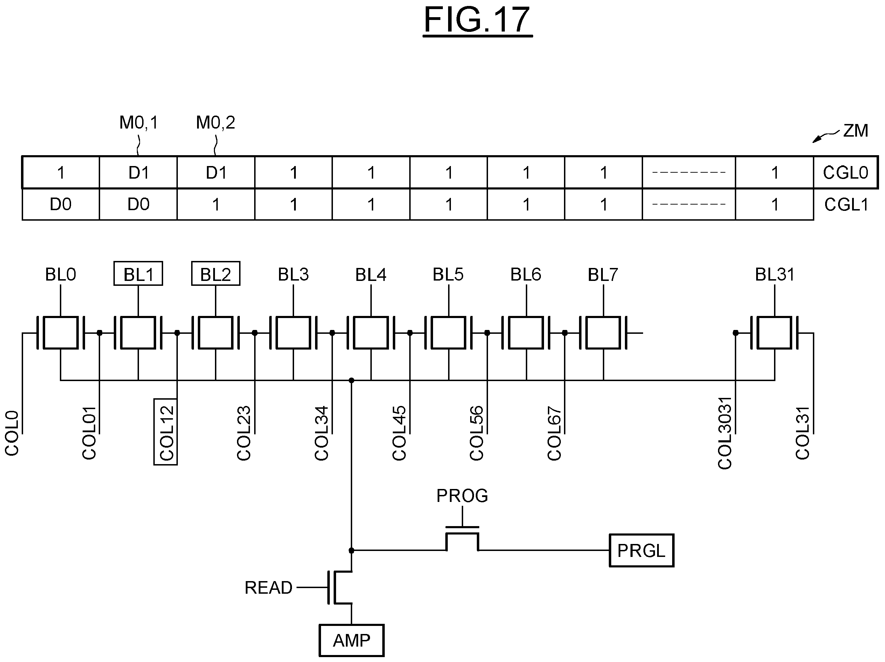

Puis, comme illustré sur la figure 17, le décodeur colonne sélectionne les deux lignes de bits BL1 et BL2 à l'aide du signal logique COL12.

Par ailleurs, c'est cette fois-ci la ligne de contrôle de grille CGL0 qui est sélectionnée.

En conséquence, la deuxième donnée D1 de l'information est stockée simultanément dans les deux cellules-mémoire M0,2 et M0,3 de la première ligne L0.

L'opération d'écriture se poursuit ensuite séquentiellement jusqu'à l'écriture de la dernière donnée D31 de l'information dans la cellule-mémoire M0,31.

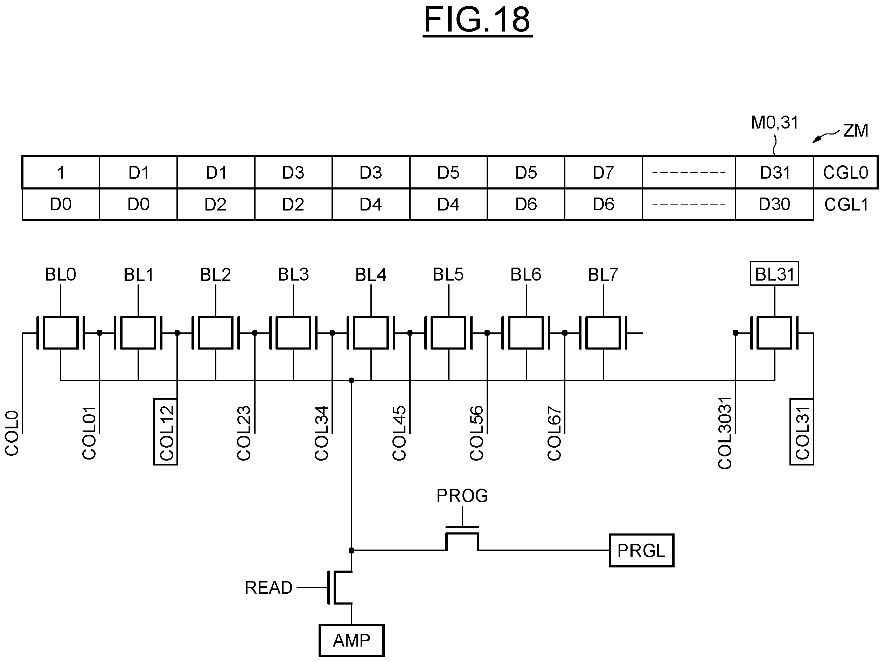

Ceci est effectué en sélectionnant la ligne de bits BL31 au moyen du signal logique COL31 et en sélectionnant la ligne de contrôle de grille CGL0 (figure 18).

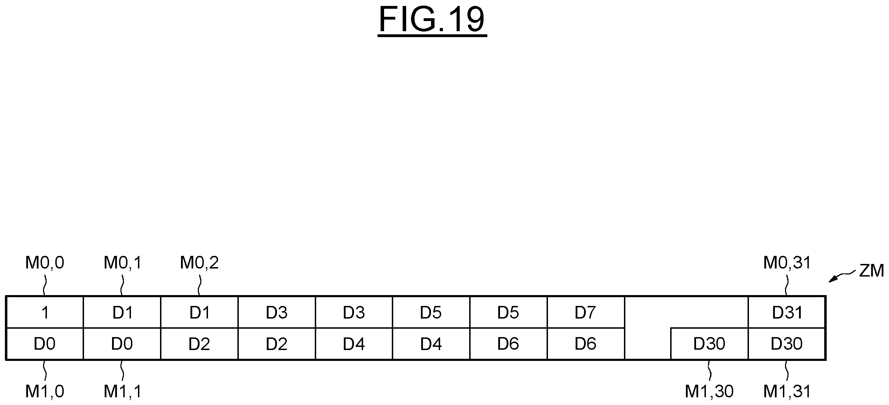

A la fin de cette opération d'écriture, on obtient, comme illustré sur la figure 19, un remplissage de la zone mémoire en damier de telle sorte qu'une donnée, à l'exception de la dernière donnée D31, est stockée dans deux cellules-mémoire adjacentes d'une même ligne et que deux données successives sont respectivement stockées dans deux cellules jumelles d'une même colonne.

Par ailleurs, la cellule jumelle M0,0 de celle M1,0 stockant la donnée D0 stocke la valeur 1 tandis que la dernière donnée D31 est stockée dans la cellule-mémoire M0,31 jumelle de la cellule-mémoire M1,31 stockant la donnée D30.

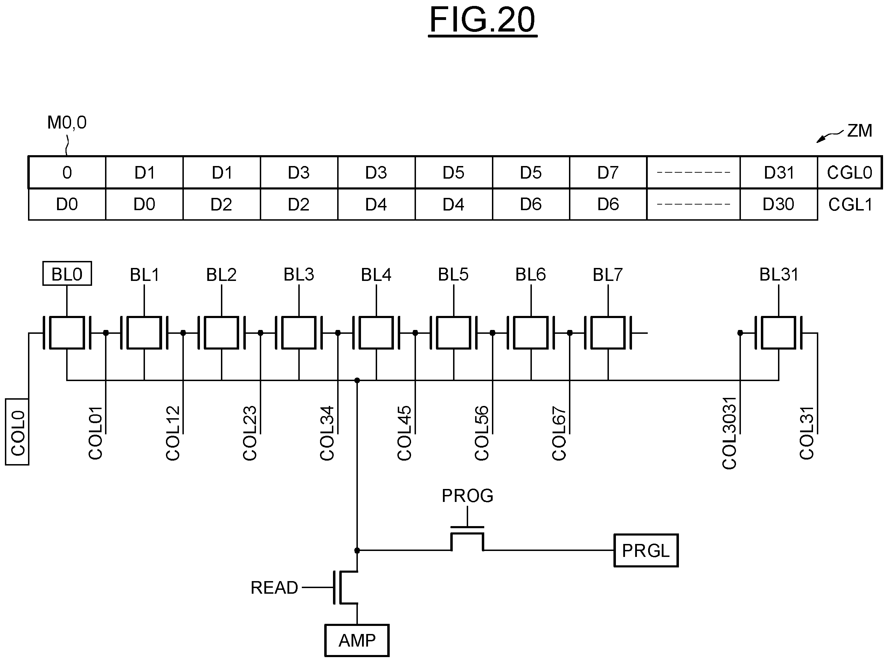

On se réfère maintenant plus particulièrement aux figures 20 à 27 pour illustrer un exemple de lecture de l'information (code RD2) stockée dans la zone mémoire ZM.

Puisque la tension nulle (masse GND) est appliquée en lecture sur les grilles de commande de toutes les cellules-mémoire de la zone mémoire, la lecture d'une première cellule-mémoire jumelle d'une colonne entraîne simultanément la lecture de la deuxième cellule jumelle.

Or, si la première cellule jumelle contient un « 1 » logique, alors ce « 1 » logique va masquer la valeur lue de la donnée située dans la deuxième cellule jumelle.

En effet, la lecture de ces deux cellules jumelles va toujours donner un « 1 » logique quelle que soit la valeur de la donnée stockée.

C'est la raison pour laquelle il est nécessaire, avant de lire une cellule-mémoire, de remplacer la valeur stockée dans sa cellule jumelle par un bit de référence choisi de façon à permettre la restitution correcte de la donnée stockée. En l'espèce, ce bit de référence aura la valeur « 0 » ce qui correspond à une programmation préalable de la cellule jumelle de façon à y stocker un « 0 ».

Ceci est illustré sur la figure 20.

Plus précisément, à l'aide du signal logique COLO, on sélectionne la ligne de bits BL0 et, à l'aide du signal de contrôle de ligne CGLO, on programme la cellule mémoire M0,0 de façon à y stocker un « 0 » logique.

Puis, on peut procéder à la lecture des deux cellules jumelles M0,0 de façon à y stocker un « 0 » logique.

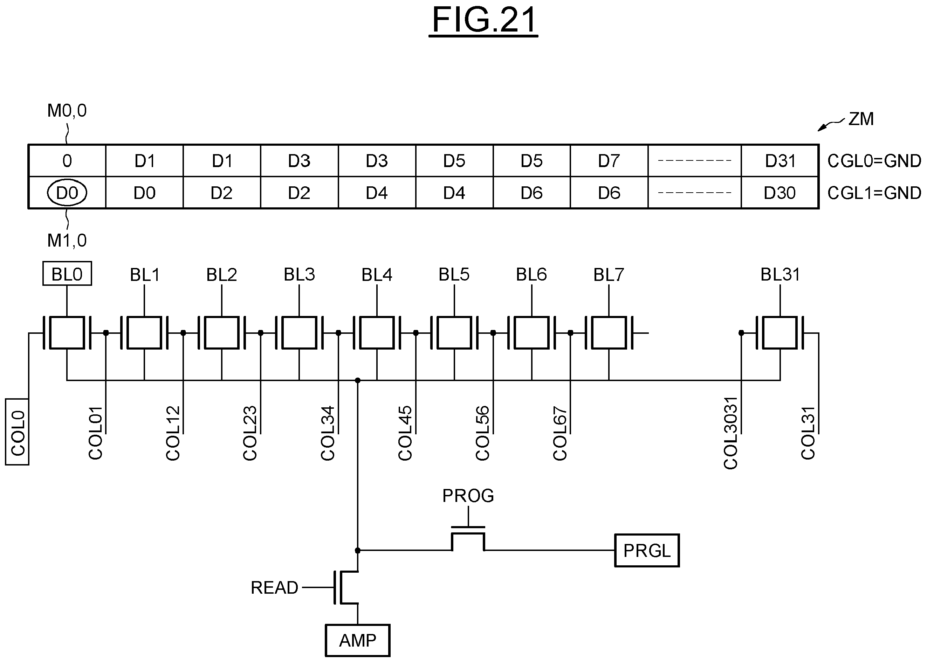

Puis, on peut procéder à la lecture des deux cellules jumelles M0,0 et M1,0 toujours en sélectionnant la ligne de bits BL0 à l'aide du signal logique COLO, comme illustré sur la figure 21.

Et, cette fois-ci, la donnée D0 est correctement lue.

En effet, si la donnée D0 est égale 0, alors la valeur 0 sera effectivement lue par le circuit amplificateur de lecture AMP.

Et, si la valeur logique de la donnée D0 est égale à 1, alors un « 1 » logique sera lu par le circuit amplificateur de lecture AMP.

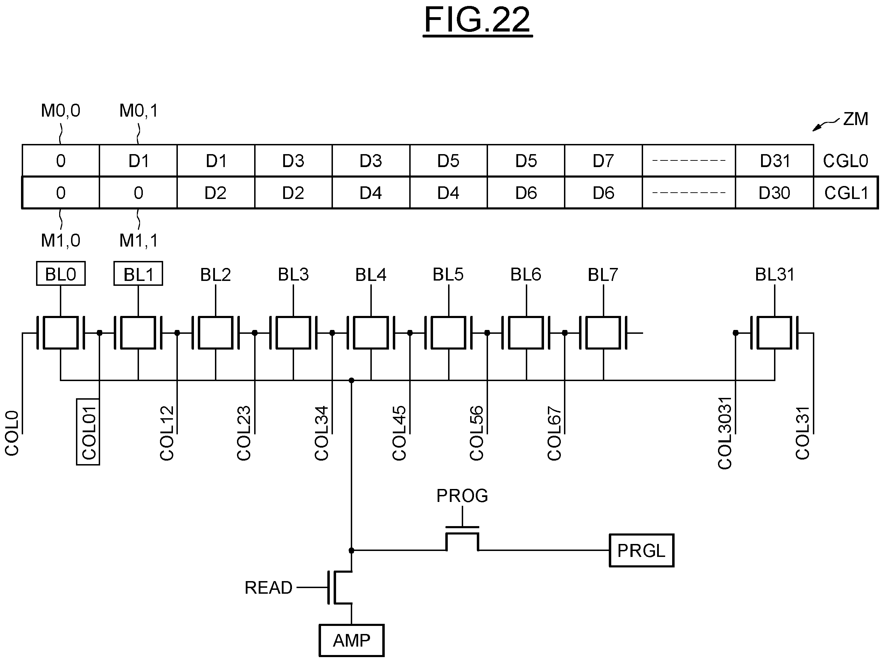

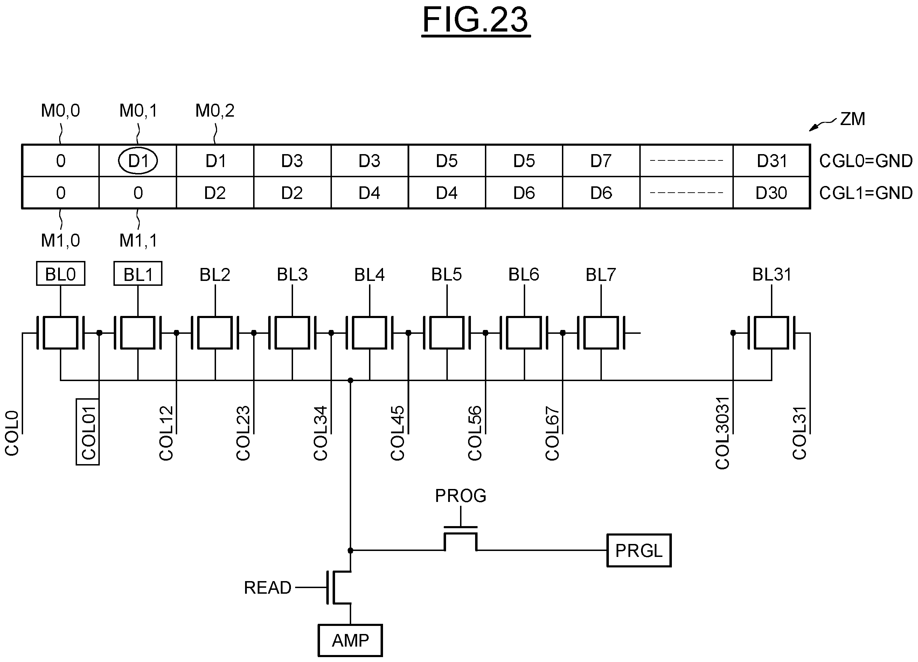

On procède ensuite comme illustré sur les figures 22 et 23 à la lecture de la donnée D1.

Et, comme cette fois-ci le décodeur colonnes va sélectionner les deux lignes de bits BL0 et BL1 simultanément, et que la tension nulle GND est appliquée sur les grilles de commande de transistors d'état de toutes les cellules-mémoire, il va y avoir une lecture simultanée des deux cellules jumelles situées sur la colonne « 0 » et des deux cellules jumelles situées sur la colonne « 1 ».

Aussi, de façon à obtenir une restitution correcte de la valeur logique de la donnée D1, il est nécessaire, préalablement à la lecture de cette donnée D1, non seulement de programmer la cellule jumelle de la cellule D1 avec la valeur « 0 » mais également de programmer la cellule qui comportait la donnée D0 précédemment lue.

Ceci est illustré sur la figure 22.

On voit que dans cette étape préalable de programmation, de par la sélection des lignes de bits BL0 et BL1 par le signal logique COL01 et de par l'application de la tension de programmation sur la ligne de contrôle de grille CGL1, on programme avec la valeur logique « 0 » les cellules-mémoire M1,0 et M1,1.

De ce fait, comme illustré sur la figure 23, la sélection des deux lignes de bits BL0 et BL1 et l'application de la tension nulle GND sur les grilles de commande des transistors d'état conduisent à lire simultanément la valeur logique de la donnée D1 et les trois valeurs logique « 0 » stockées dans les cellules-mémoires M0,0, M1,0 et M1,1.

De ce fait, la valeur logique de la donnée D1 est correctement restituée. En effet, si cette donnée est égale à 0, alors le circuit amplificateur de lecture lira effectivement un « 0 » tandis que si cette valeur logique est égale à 1, le circuit amplificateur de lecture lira effectivement un « 1 ».

Il convient donc de noter ici que non seulement la programmation préalable permet d'effectuer une restitution correcte de la donnée à lire mais que cette programmation préalable détruit également la donnée qui a été précédemment lue.

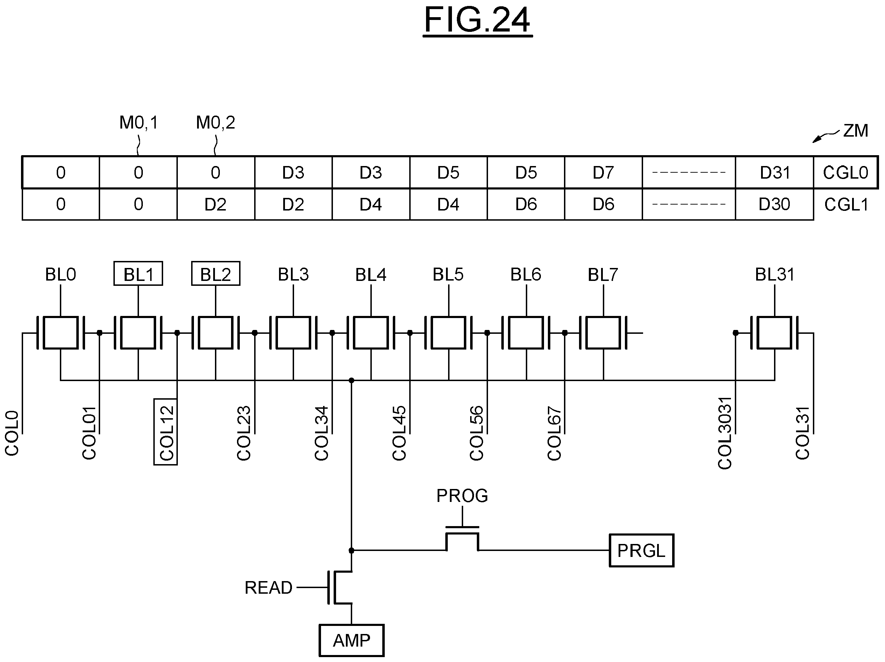

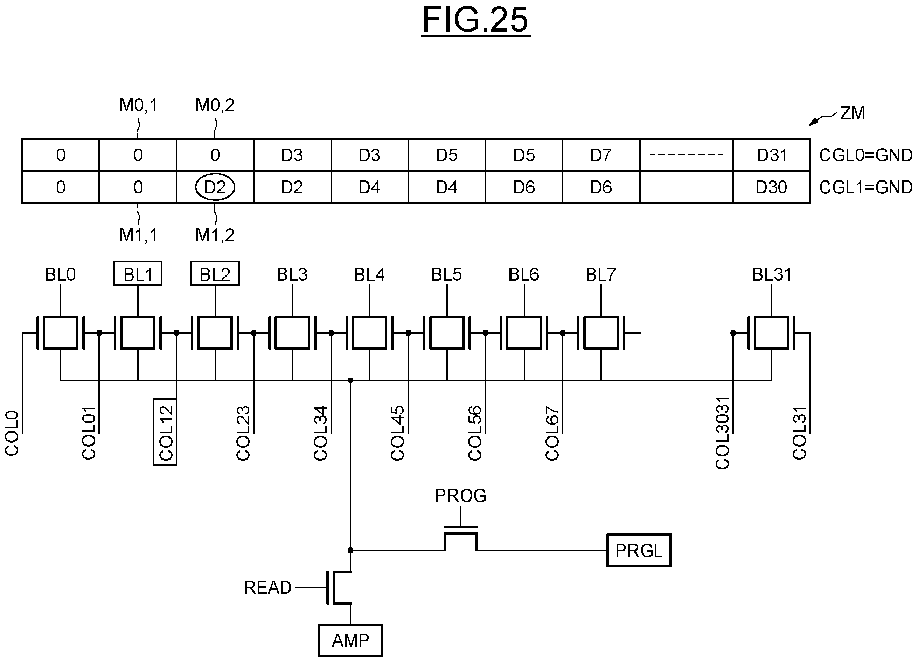

Les figures 24 et 25 illustrent la lecture de la donnée suivante D2.

Préalablement à cette lecture, on effectue une programmation des cellules M0,1 et M0,2 (figure 24) puis une lecture de la donnée D2 stockée dans la cellule-mémoire M1,2 (figure 25).

La donnée D1 a de ce fait été détruite.

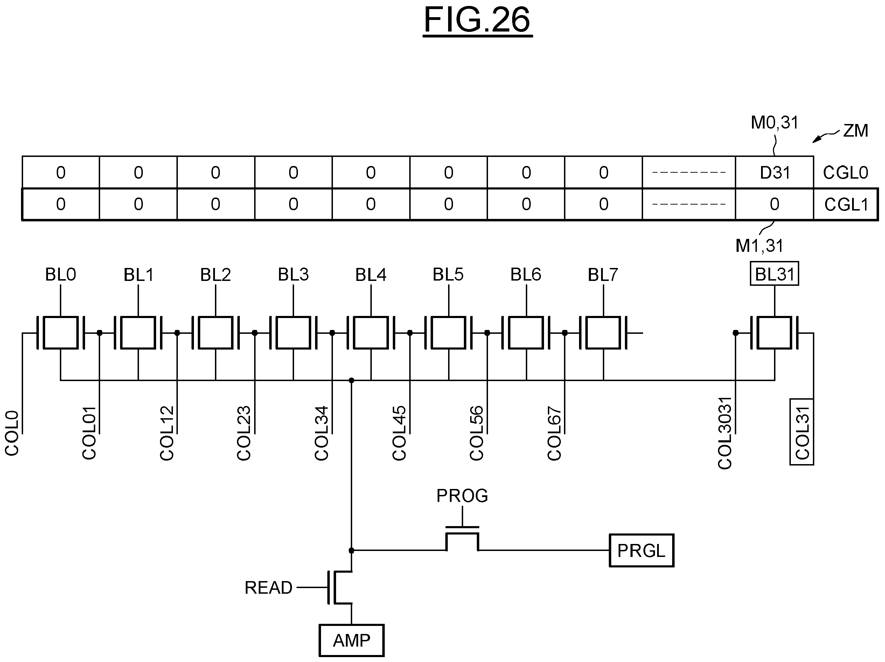

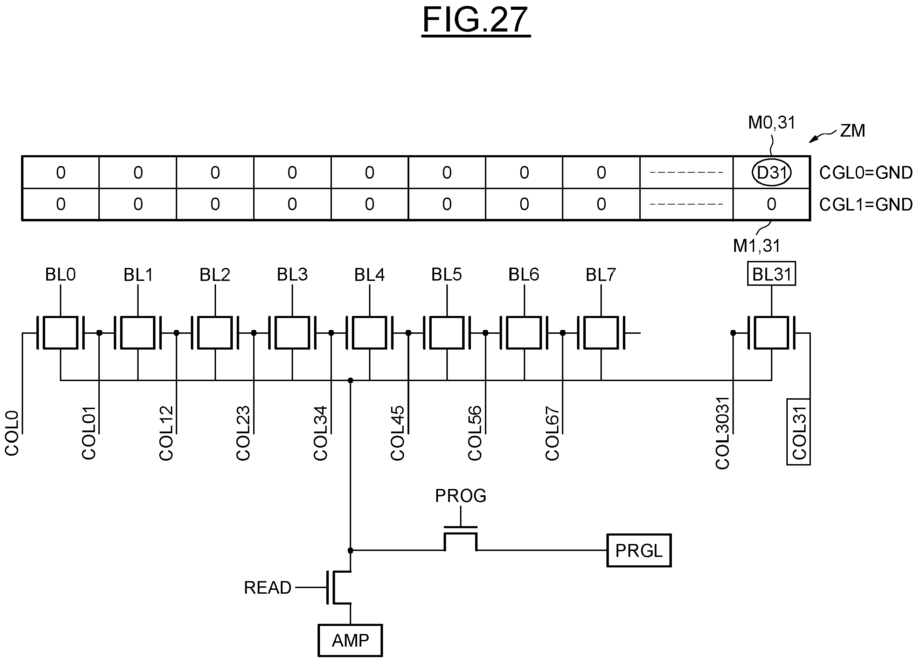

Les figures 26 et 27 illustrent la lecture de la dernière donnée D31.

A cet égard, comme illustré sur la figure 26, on procède à une programmation préalable de la cellule jumelle M1,31 puis comme illustré sur la figure 27 à une lecture de la cellule D31 stockée dans la cellule-mémoire M0,31.

A l'issue de cette lecture, on remarque que toutes les cellules-mémoire à l'exception de la dernière cellule M0,31, stockent un 0 logique.

La lecture des N données binaires du code RD2 stocké a donc détruit tous les bits de ce code à l'exception du dernier.

Et, on ne peut donc plus lire une nouvelle fois ce code RD2 dans la zone mémoire ZM.

Cela étant les D zones ZM1-ZMD vont être successivement lues comme indiqué ci-avant pour la zone ZM, de façon à permettre une lecture de l'information RD2 uniquement D fois.

### Le deuxième module de fonction physiquement non clonable MPF2 et son fonctionnement

Le deuxième module MPF2 peut être un module de fonction physiquement non clonable ayant les caractéristiques du dispositif de fonction physiquement non clonable décrit dans la demande de brevet français déposée sous le n°2002929, qui est à toutes fins utiles incorporée par référence dans la présente demande de brevet.

On en rappelle maintenant certaines caractéristiques.

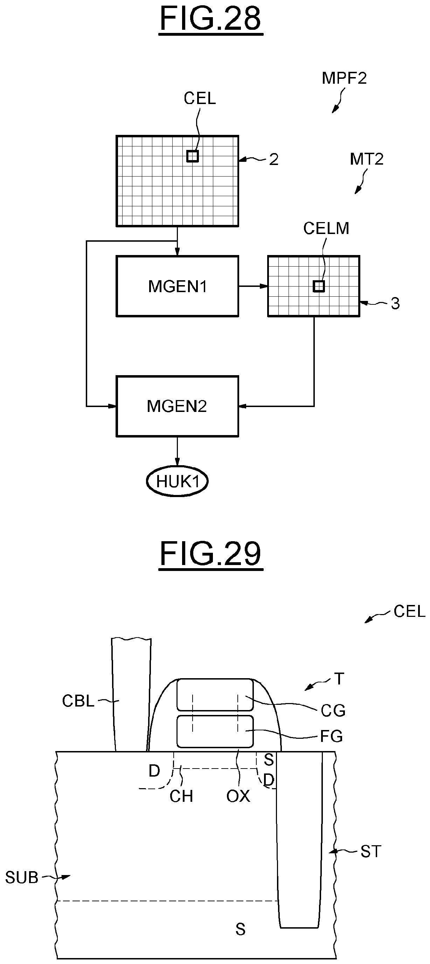

Comme illustré sur la figure 28, le deuxième module MPF2 comprend un deuxième ensemble 2 de cellules-mémoire non-volatiles CEL.

Le dispositif DIS comporte également des deuxièmes moyens de traitement MT2 configurés pour délivrer le code non prédictible HUK1 à partir d'une lecture des tensions de seuils effectives des transistors d'état des cellules-mémoire CEL du deuxième ensemble 2.

Chaque cellule-mémoire CEL a les caractéristiques décrites en référence à la figure 6.

Mais comme illustré sur la figure 29, la cellule CEL comporte un transistor d'état T ayant une grille de commande ou grille de contrôle CG et une grille flottante FG qui sont ici électriquement connectées par exemple au moyen d'un via ou contact qui n'est pas situé dans le plan de la figure 29 mais qui est représenté schématiquement par deux traits pointillés.

La grille flottante FG est séparée du substrat semiconducteur SUB par un oxyde de grille OX dont l'épaisseur est avantageusement supérieure à 8 nanomètres par exemple compris entre 8 et 10 nanomètres.

Le drain D du transistor d'état T est connecté à une ligne de bits par l'intermédiaire d'un contact CBL.

La grille de commande CG du transistor T est quant à elle connectée à une ligne de contrôle de grille.

Comme indiqué ci-avant, le canal du transistor d'état T comporte un canal implanté en surface CH, par exemple dopé N, de façon que la cellule-mémoire correspondante fonctionne dans un mode d'appauvrissement.

En d'autres termes, le transistor d'état T étant du type à appauvrissement (« depletion » en langue anglaise), le caractère normalement passant (« normally on ») du transistor d'état lorsque la cellule-mémoire est dans un état vierge et qu'une tension nulle est appliquée sur la grille de commande est lié à la valeur de sa tension de seuil dans l'état vierge de la cellule-mémoire qui peut être choisie négative ou sensiblement nulle.

Dans le cas d'un canal de conductivité N, les dopants implantés peuvent être par exemple de l'arsenic As et la concentration de dopants détermine la tension de seuil du transistor T d'une cellule-mémoire à l'état vierge.

Comme pour les cellules du premier ensemble 1, le transistor d'état est ici configuré pour avoir une tension de seuil d'une cellule-mémoire à l'état vierge négative, par exemple de l'ordre de -1 volts.

Tous les transistors d'état de toutes les cellules CEL du premier ensemble sont destinés à présenter la même tension de seuil.

Cela étant, les tensions de seuil effectives, c'est-à-dire les valeurs réelles des tensions de seuil, varient légèrement suivant une dispersion aléatoire, par exemple due à des aléas physiques de fabrication. Ce type de dispersion est habituel et connu en soi.

Les grilles de commande et flottante des transistors d'état étant électriquement reliées, les transistors d'état présentent par nature une variabilité face à ces aléas plus importante et donc une distribution plus large.

Ainsi, les transistors T des cellules CEL du deuxième ensemble 2 présentent chacun une tension de seuil effective appartenant à une distribution aléatoire commune.

En particulier, la distribution aléatoire commune peut être une distribution de tensions de seuil de transistors de cellules-mémoires à l'état vierge n'ayant jamais été écrites.

Si l'on se réfère de nouveau à la figure 28, on voit que les deuxièmes moyens de traitement MT2 comportent un troisième ensemble 3 de cellules-mémoire CELM possédant chacune également un transistor de sélection enterré dans un substrat semiconducteur et un transistor d'état ayant une grille de commande et une grille flottante.

En fait, les cellules-mémoire CELM sont analogues aux cellules-mémoire CEL à la différence près que les grilles flottantes et les grilles de commande des transistors d'état ne sont pas électriquement connectées. Elles ont également les caractéristiques décrites en référence à la figure 6.

Comme on le verra plus en détail ci-après, ces cellules-mémoire CELM sont destinées à stocker des informations de fiabilité représentatives de la fiabilité ou de la non-fiabilité des contenus des cellules-mémoire CEL du deuxième ensemble 2.

Les deuxièmes moyens de traitement MT2 comportent des premiers moyens de génération MGEN1 configurés pour générer lesdites informations de fiabilité.

Les deuxièmes moyens de traitement MT2 comportent également des deuxièmes moyens de génération MGEN2 configurés pour générer le code HUK1 au moins à partir de lectures des tensions de seuil effectives des transistors d'état des cellules-mémoire CEL et desdites informations de fiabilité contenues dans les cellules-mémoire CELM du troisième ensemble 3.

On reviendra plus en détail sur un exemple de structure et de fonctionnement des premiers moyens de génération MGEN1, des deuxièmes moyens de génération MGEN2 et de l'agencement matriciel du deuxième ensemble de cellules 3.

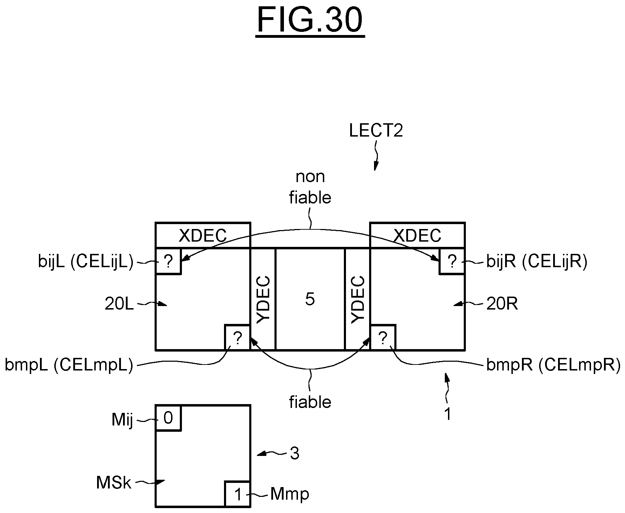

Si l'on se réfère maintenant plus particulièrement à la figure 30, on voit que dans ce mode de réalisation avantageux, le deuxième ensemble 2 de cellules-mémoire non volatiles CEL est organisé en deux deuxièmes sous-ensembles matriciels 20L et 20R disposés symétriquement par rapport à des deuxièmes moyens de lecture LECT2 de structure classique et connue en soi, comportant typiquement des amplificateurs de lecture (« sense amplifiers ») 5.

Toutes les lignes ou rangées des deux deuxièmes sous-ensembles matriciels 20L et 20R sont parallèles.

Le décodage ligne de chacun de ces deux sous-ensembles 20L, 20R est effectué par des décodeurs lignes XDEC de structure classique et connue en soi tandis que le décodage colonnes de ces deux premiers sous-ensembles est effectué par deux décodeurs colonnes YDEC, également de structure classique et connue en soi, disposés symétriquement par rapport aux amplificateurs de lecture 5.

Et, ces deuxièmes moyens de lecture LECT2 sont configurés pour effectuer des lectures différentielles des tensions de seuil effectives des transistors d'état des paires de cellules-mémoire symétriques CELijL et CELijR ou CELmpL et CELmpR et situées respectivement dans les deux deuxièmes sous-ensembles 20L et 20R sur des colonnes homologues de ces deux deuxièmes sous-ensembles.

Et, les cellules-mémoire du troisième ensemble 3 sont destinées à contenir les informations de fiabilité représentatives de la fiabilité ou de la non fiabilité des contenus des paires de cellules-mémoire du deuxième ensemble.

Ces informations de fiabilité sont ici des données binaires ayant une première valeur logique, par exemple la valeur logique 0, représentative d'une non-fiabilité des contenus d'une paire de cellules-mémoire donnée du deuxième ensemble ou bien une deuxième valeur logique, par exemple la valeur logique 1, représentative d'une fiabilité des contenus d'une paire de cellules-mémoire donnée du deuxième ensemble.

Ainsi, à titre d'exemple, sur la figure 30, l'information de fiabilité Mij, ayant ici la valeur logique 0, est représentative de la non-fiabilité des contenus bijL et bijR de la paire de cellules-mémoire CELijL et CELijR du deuxième ensemble.

Par contre, l'information de fiabilité Mmp qui a la valeur logique 1, est ici représentative de la fiabilité des contenus bmpL et bmpR de la paire de cellules-mémoire CELmpL et CELmpR du deuxième ensemble.

L'ensemble de ces informations de fiabilité forme un masque MSK.

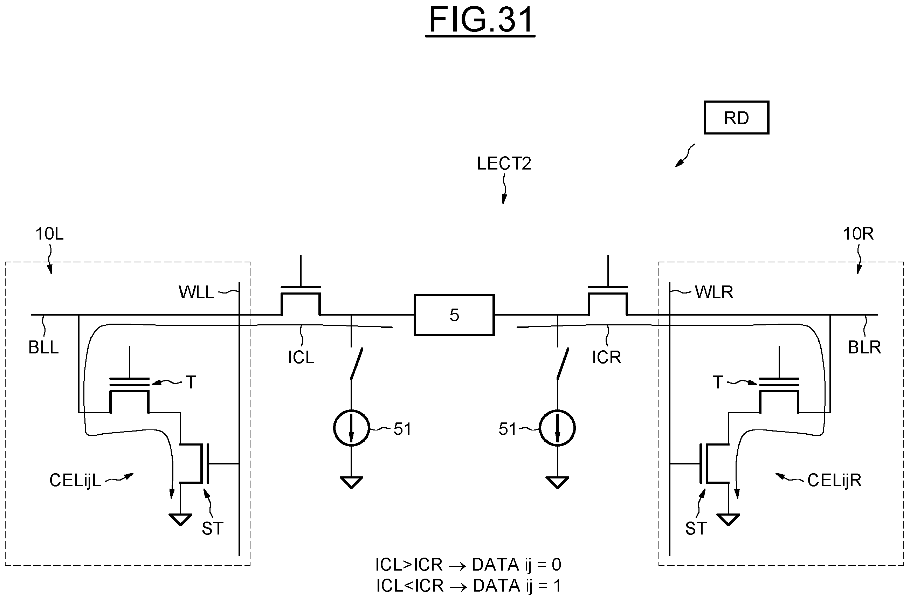

On se réfère maintenant plus particulièrement à la figure 31 pour décrire une lecture différentielle RD effectuée par des deuxièmes moyens de lecture LECT2 incorporant les amplificateurs de lecture 5.

Dans l'exemple illustré sur la figure 31, les deuxièmes moyens de lecture LECT2 sont configurés pour mesurer la différence entre les tensions de seuil effectives de la paire de transistors d'état T appartenant respectivement aux deux cellules-mémoire CELijL et CELijR.

Les deuxièmes moyens de lecture sont couplés aux transistors T via les lignes de bits respectives BLL et BLR.

Les transistors de sélection ST sont commandés sur leur grille par des signaux véhiculés sur les lignes de mots respectives WLL et WLR.

Outre les amplificateurs de lecture 5, les deuxièmes moyens de lecture comportent des générateurs de courant de référence 51 pouvant être connectés ou non aux amplificateurs de lecture 5 par l'intermédiaire d'interrupteurs.

Dans le cadre d'une lecture différentielle RD telle que celle illustrée sur la figure 31, avantageusement effectuée avec les grilles de commande des transistors d'état connectées à la masse, les générateurs de courant de référence ne sont pas connectés aux amplificateurs de lecture 5.

L'amplificateur de lecture 5 est configuré pour amplifier une différence entre le courant ICL écoulé dans la cellule CELijL et le courant ICR écoulé dans la cellule CELijR.

Ces courants de lecture ICL et ICR étant représentatifs des tensions de seuil effectives des transistors à grille flottante des cellules respectives CELijL et CELijR, la différence de ces courants est représentative de la différence entre les tensions de seuil effectives de ces transistors d'état.

Ainsi, les deuxièmes moyens de lecture LECT2 sont capables de mesurer la différence entre les tensions de seuil effectives des paires de transistors d'état de deux cellules disposées sur des lignes de bits homologues.

Et, à titre d'exemple non limitatif, on peut décider que si le courant ICL est supérieur au courant ICR, alors la donnée DATAij contenue dans cette paire de cellules a une valeur logique 0 tandis que si le courant ICL est inférieur au courant ICR, alors cette donnée a une valeur logique 1.

Bien entendu, on aurait pu adopter la convention inverse.

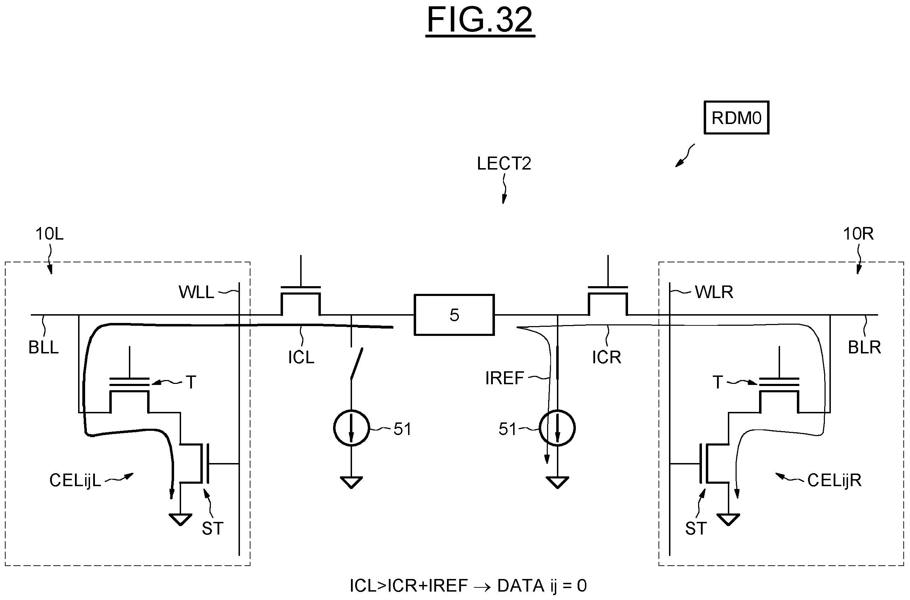

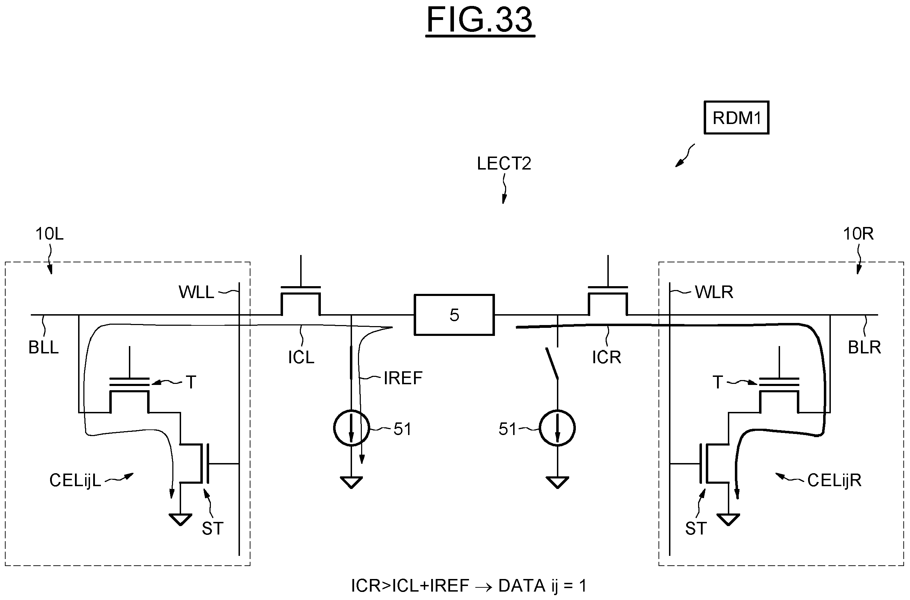

On se réfère maintenant plus particulièrement aux figures 32 et 33 pour décrire des lectures différentielles des tensions de seuil effectives des transistors d'état des paires de cellules-mémoire en prenant en compte une valeur de marge.

Là encore ces lectures différentielles sont avantageusement effectuées avec les grilles de commande des transistors d'état connectées à la masse.

La figure 32 illustre une première lecture différentielle RDM0 prenant en compte une valeur de marge.

Plus précisément, lors de cette lecture RDM0, on ajoute le courant supplémentaire IREF généré par l'un des générateurs de courant 51, au courant écoulé par la cellule CELijR.

Ceci permet de mesurer une différence entre les tensions de seuil effectives à partir d'une certaine marge.

La valeur de la marge correspond au courant IREF représentatif d'un écart de tension de référence.

Cette valeur de marge est choisie notamment en fonction de la précision des deuxièmes moyens de lecture LECT2.

A titre indicatif, la valeur du courant IREF peut être égale à 2 microampères.

Et, dans ce cas, si le courant ICL est supérieur à la somme du courant ICR et du courant IREF, alors la donnée stockée DATAij est prise égale par exemple à 0.

Sur la figure 33, on illustre une autre lecture différentielle RDM1, effectuée par les deuxièmes moyens de lecture LECT2 et prenant en compte la valeur de marge.

Plus précisément, dans ce cas, le courant de référence IREF est ajouté au courant ICL écoulé dans la cellule CELijL.

Et, par exemple, si le courant ICR est supérieur à la somme du courant ICL et du courant IREF, alors DATAij est égal à 1.

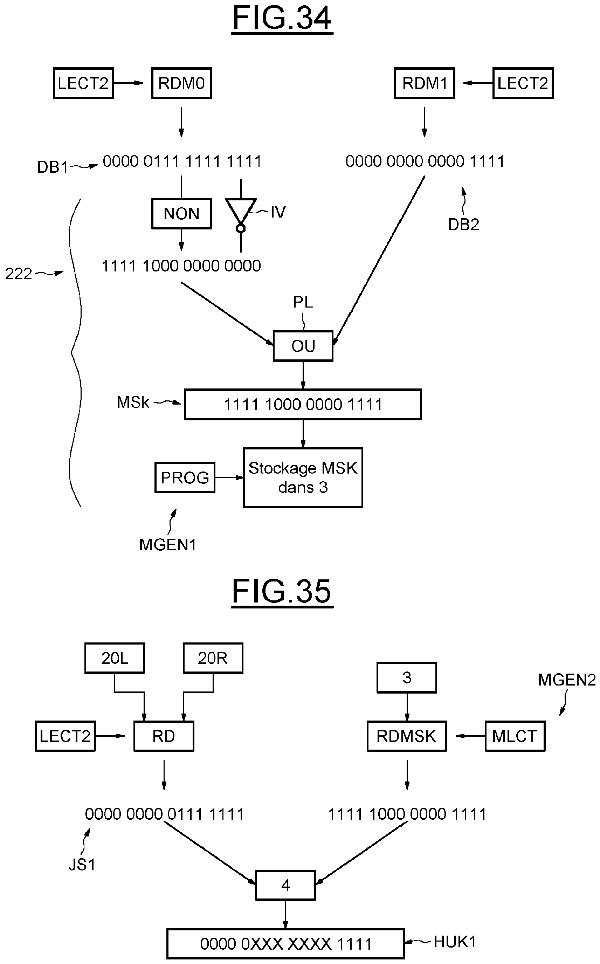

On se réfère maintenant plus particulièrement à la figure 34 pour décrire un exemple de structure des premiers moyens de génération MGEN1 permettant de générer les informations de fiabilité du masque MSK.

Comme illustré sur cette figure 34, les informations de fiabilité sont générées en prenant en compte une valeur de marge sur les lectures différentielles RDM0 et RDM1 des tensions de seuil effectives des transistors d'état des paires de cellules-mémoire.

Plus précisément, les premiers moyens de génération MGEN1 comportent les deuxièmes moyens de lecture LECT2 configurés pour effectuer pour chaque paire de cellules-mémoire du deuxième ensemble 1 une première lecture, par exemple la lecture RDM0, de la différence entre d'une part le courant écoulé par une première cellule-mémoire de ladite paire augmenté du courant de référence représentatif de ladite valeur de marge et d'autre part le courant écoulé par la deuxième cellule-mémoire de ladite paire de façon à obtenir une première donnée binaire.

Les deuxièmes moyens de lecture LECT2 sont également configurés pour effectuer une deuxième lecture par exemple la lecture RDM1, de la différence entre d'une part le courant écoulé par la deuxième cellule-mémoire augmenté du courant de référence et d'autre part le courant écoulé par la première cellule-mémoire de façon à obtenir une deuxième donnée binaire.

Dans l'exemple décrit ici, on a représenté à des fins de simplification, un groupe de 16 premières données binaires DB1, par exemple [0000 0111 1111 1111], obtenues à l'issue de la première lecture RDM0 et un groupe correspondant de 16 deuxièmes données binaires DB2, par exemple [0000 0000 0000 1111], obtenues à l'issue de la lecture RDM1.

Les moyens de génération MGEN1 comportent également un module, référencé globalement par la référence 222, configuré pour générer et écrire le masque MSK dans le troisième ensemble 3 de cellules-mémoire.

Ce module 222 comporte un inverseur IV permettant d'inverser l'un des groupes de données binaires, par exemple le groupe de premières données binaires DB1 issu de la lecture RDM0, de façon à obtenir, dans le cas illustré, le groupe [1111 1000 0000 0000].

Puis, des moyens de comparaison, par exemple une porte OU référencée PL, permettent de comparer bit à bit le groupe de deuxièmes données binaires DB2 issues de la lecture RDM1 avec l'inverse du groupe de premières données binaires DB1 issues de la lecture RDM0.

Si un bit inversé a effectivement une valeur logique opposée à celle du bit correspondant non-inversé, alors on peut considérer que la donnée est fiable et affecter un 1 à l'information de fiabilité correspondante, ce qui est obtenu par la porte logique OU.

Par contre, si la valeur logique du bit inversé est égale à la valeur logique du bit non-inversé correspondant, alors la donnée est considérée comme non fiable et l'information de fiabilité correspondante aura la valeur logique 0.

On obtient donc un masque MSK comportant autant de bits qu'il y a de paires de cellules-mémoire dans le deuxième ensemble 2. Dans le cas illustré, le masque MSK est égal à [1111 1000 0000 1111].

Bien entendu il serait possible de remplacer l'inverseur et la porte OU par une porte logique du type OU EXCLUSIF (XOR).

Le module 222 comporte également des moyens d'écriture PROG, de structure classique et connue, permettant d'écrire les informations de fiabilité (bits) du masque MSK dans les cellules-mémoire correspondantes du troisième ensemble 3.

On se réfère maintenant plus particulièrement à la figure 35 pour décrire un exemple de structure des deuxièmes moyens de génération MGEN2 configurés pour générer le code HUK1 à partir des lectures différentielles des tensions de seuil effectives des transistors d'état des paires de cellules-mémoire et des informations de fiabilité associées à ces paires de cellules-mémoire.

Plus précisément, les deuxièmes moyens de lecture LECT2 procèdent à une lecture différentielle RD classique des paires de cellules-mémoire homologues respectivement situées dans les deux sous-ensembles 20L et 20R de façon à obtenir un premier jeu de données de sortie JS1, par exemple [0000 0000 0111 1111], comportant dans cet exemple simplifié 16 données binaires de sortie.

Cette lecture est avantageusement effectuée avec les grilles de commande des transistors d'état connectées à la masse.

Des moyens de lecture classiques MLCT comportant également des amplificateurs de lecture tels que les amplificateurs de lecture 5, effectuent une lecture classique RDMSK des informations de fiabilité MSK correspondant aux paires de cellules lues et contenues dans les cellules-mémoire CELM du troisième ensemble 3, par exemple [1111 1000 0000 1111].

Cette lecture RDMSK est également avantageusement effectuée avec les grilles de commande des transistors d'état connectées à la masse.

Les deuxièmes moyens de génération MGEN2 comportent alors des moyens de masquage 4 configurés pour ne conserver en tant que code HUK1 que les données binaires du jeu JS1 qui sont affectées d'une information de fiabilité signifiant que la donnée est fiable, en l'espèce une information de fiabilité égale à 1.

Dans le cas présent, les données considérées comme fiables (valeur 1) sont les cinq premiers bits de gauche et les quatre derniers bits, les autres bits étant incertains (X).

Par conséquent, comme illustré sur la figure 35 à titre d'exemple, le code HUK1 ne comportera que 9 bits sur les 16 du jeu JS1 [0000 0XXX XXXX 1111].

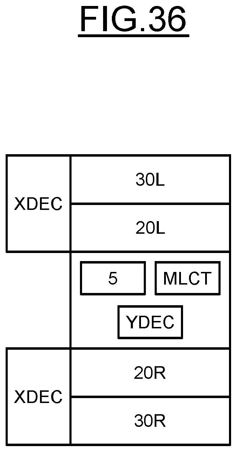

Bien que cela ne soit pas indispensable, il est préférable comme illustré sur la figure 36 que le troisième ensemble 3 de cellules-mémoire qui est destiné à stocker les informations de fiabilité, comporte deux troisièmes sous-ensembles 30L et 30R respectivement répartis de part et d'autre des deuxièmes sous-ensembles 20L et 20R.

Par ailleurs, les informations de fiabilité associées aux paires de cellules-mémoire sont stockées dans les cellules-mémoire du troisième ensemble situées sur les mêmes colonnes que celles sur lesquelles sont situées lesdites paires correspondantes de cellules-mémoire.

Par ailleurs, le premier ensemble 1 de cellules-mémoire comportant les deux sous-ensembles 10L et 10R, le deuxième ensemble 2 de cellules-mémoire comportant les deux sous-ensembles 20L et 20R, le troisième ensemble 3 de cellules-mémoire comportant les deux sous-ensembles 30L et 30R, le plan mémoire du dispositif de mémoire non volatile DM ainsi que les moyens de gestion sont situés au sein du même circuit intégré IC.

Ceci simplifie le décodage colonne et rend encore plus difficile une extraction des données par une attaque par exemple face arrière, du dispositif DIS.

### Architecture de décodeur colonne compatible avec des architectures de plan mémoire « simple ligne de bit » et double ligne de bits ».

En raison de la disparité de structure des différents plans mémoire du dispositif DIS (architecture à une ligne de bit par colonne pour le plan mémoire des zones mémoire ZM1-ZMD, et architecture à deux lignes de bits par colonne pour les ensembles 1, 2 et 3 de cellules-mémoires), certaines métallisations du circuit intégré sont interrompues et sont affectées uniquement à certaines colonnes (lignes de bits) du plan mémoire des zones mémoires ZM1-ZMD, tandis que d'autres métallisations sont communes à une colonne du plan mémoire des zones mémoires ZM1-ZMD et à une colonne des plans mémoire des ensembles 1, 2 et 3, et que d'autres métallisations sont affectées uniquement à des colonnes des plans mémoire des ensembles 1, 2 et 3.

Ceci est illustré partiellement sur la figure 37, où l'on voit qu'une métallisation MET2A interrompue correspond à la ligne de bits BL0 de la colonne 0 référencée COLO du plan mémoire des zones mémoire ZM1-ZMD, et qu'une autre métallisation MET2B correspond à la ligne de bits BL1 de la colonne 1 COL1 du plan mémoire des zones mémoire ZM1-ZMD ainsi qu'à l'une B1,0 des lignes de bits de la colonne 0 COLO des plan mémoires des ensembles 1, 2 et 3.

L'autre ligne de bits B2,0 de la colonne 0 COLO des plans mémoires des ensembles 1, 2 et 3 est matérialisée par la métallisation MET3.

Deux autres métallisation MET5 correspondent aux deux lignes de bits B1,1 et B2,1 de la colonne 1 COL1 des plan mémoires des ensembles 1, 2 et 3.

Ainsi, comme illustré schématiquement sur la figure 38, certaines colonnes du plan mémoire des zones mémoire ZM1-ZMD sont adressables individuellement, en l'espèce les colonnes de rang pair, COLO, COL2, .....

Les colonnes de rang impair COL1, COL3,... du plan mémoire des zones mémoire ZM1-ZMD sont adressables simultanément aux colonnes de rang 4k, COLO, COL4,....des plans mémoires des ensembles 1, 2 et 3.

Les colonnes de rangs 4k+1, 4k+2 et 4k+3, COL1, COL2, COL3, COL5, COL6, COL7,.... des plans mémoires des ensembles 1, 2 et 3 sont adressables individuellement.

Un décodeur colonne COLDEC, unique, illustré schématiquement sur la figure 38, est configuré pour
- sélectionner individuellement les deux colonnes situées aux deux extrémités de chaque zone mémoire ZMi,
- sélectionner simultanément deux colonnes adjacentes de chaque zone mémoire ZMi et une colonne des premier, deuxième et troisième ensembles commune à l'une de ces deux colonnes adjacentes, et
- sélectionner individuellement les autres colonnes des premier, deuxième et troisième ensembles.

Ce décodeur colonne comporte des commutateurs à base de transistors MOS, commandés sur leur grille par des signaux de commande et dont les sources sont reliées à un nœud commun ND connecté à des moyens de lecture ou de programmation.

Ici à des fins de simplification seulement 10 commutateurs SW0-SW9 sont représentés commandés par des signaux de commande SC0, SCA à SCJ.

Le signal SC0 qui commande le commutateur SW0 permet de sélectionner individuellement la colonne COLO des zones mémoires ZMi.

Le signal SCA qui commande les commutateurs SW0 et SW1 permet de sélectionner la colonne COLO des ensembles de cellules-mémoires 1, 2 et 3 ainsi que simultanément les colonnes COLO et COL1 des zones mémoires ZMi.

Le signal SCB qui commande les commutateurs SW1 et SW5 permet de sélectionner la colonne COLO des ensembles de cellules-mémoires 1, 2 et 3 ainsi que simultanément les colonnes COL1 et COL2 des zones mémoires ZMi.

Le signal SCC qui commande le commutateur SW2 permet de sélectionner la colonne COL1 des ensembles de cellules-mémoires 1, 2 et 3.

Le signal SCD qui commande le commutateur SW3 permet de sélectionner la colonne COL2 des ensembles de cellules-mémoires 1, 2 et 3.

Le signal SCE qui commande le commutateur SW4 permet de sélectionner la colonne COL3 des ensembles de cellules-mémoires 1, 2 et 3.

Le signal SCF qui commande les commutateurs SW5 et SW6 permet de sélectionner la colonne COL4 des ensembles de cellules-mémoires 1, 2 et 3 ainsi que simultanément les colonnes COL2 et COL3 des zones mémoires ZMi.

Le signal SCG qui commande les commutateurs SW6 et un autre commutateur non représenté sur cette figure à des fins de simplification permet de sélectionner la colonne COL4 des ensembles de cellules-mémoires 1, 2 et 3 ainsi que simultanément les colonnes COL3 et COL4 des zones mémoires ZMi.

Le signal SCH qui commande le commutateur SW7 permet de sélectionner la colonne COL5 des ensembles de cellules-mémoires 1, 2 et 3.

Le signal SCI qui commande le commutateur SW8 permet de sélectionner la colonne COL6 des ensembles de cellules-mémoires 1, 2 et 3.

Le signal SCJ qui commande le commutateur SW9 permet de sélectionner la colonne COL7 des ensembles de cellules-mémoires 1, 2 et 3, et ainsi de suite....

## Revendications

1. Dispositif intégré de fonction physiquement non clonable, comprenant un premier module de fonction physiquement non clonable (MPF1), interne au dispositif (DIS), configuré pour générer un groupe de données initiales (RD2) et des moyens de gestion (MGST), internes au dispositif, au moins configurés pour
- générer un groupe de données de sortie (HUK2) à partir d'au moins le groupe de données initiales (RD2),
- autoriser uniquement D délivrances successives du groupe de données de sortie (HUK2) sur une première interface de sortie (INST1) du dispositif, D étant un entier positif non nul, et
- empêcher toute nouvelle génération du groupe de données de sortie (HUK2).

2. Dispositif selon la revendication 1, dans lequel les moyens de gestion (MGST) sont configurés pour empêcher toute nouvelle génération du groupe de données de sortie (HUK2) en empêchant toute nouvelle génération du groupe de données initiales (RD2).

3. Dispositif selon l'une des revendications précédentes, dans lequel le premier module (MPF1) comprend
- un premier ensemble (1) de cellules-mémoires non volatiles possédant chacune un transistor de sélection enterré dans un substrat semi-conducteur et un transistor d'état, de préférence du type à appauvrissement, ayant une grille de commande et une grille flottante, les transistors d'état ayant des tensions de seuils effectives respectives appartenant à une distribution aléatoire commune, et
- des moyens de lecture (LECT) configurés pour délivrer le groupe de données initiales à partir d'une lecture des tensions de seuil effectives des transistors d'état des cellules-mémoires dudit premier ensemble.

4. Dispositif selon la revendication 3, dans lequel le premier ensemble (1) de cellules-mémoires non volatiles est organisé en deux premiers sous-ensembles matriciels (10L; 10R) disposés symétriquement par rapport aux moyens de lecture, toutes les lignes des deux premiers sous-ensembles matriciels étant parallèles, et
- les moyens de lecture (LECT) sont configurés pour effectuer ladite lecture comportant des lectures différentielles des tensions de seuil effectives des transistors d'état des paires de cellules-mémoires symétriques et situées respectivement dans les deux premiers sous-ensembles sur des colonnes homologues de ces deux premiers sous-ensembles.

5. Dispositif selon les revendications 2 et 4, dans lequel les moyens de gestion (MGST) sont configurés pour programmer ou effacer les cellules-mémoires de l'un des deux sous-ensembles postérieurement à la lecture du groupe de données initiales, de façon à empêcher toute nouvelle génération du groupe de données initiales.

6. Dispositif selon l'une des revendications précédentes, dans lequel le groupe de données initiales (RD2) comporte G données initiales et les moyens de gestion (MGST) comprennent un dispositif de mémoire non volatile (DM) comportant
- un plan mémoire comportant D zones mémoires (ZM1-ZMD), chaque zone mémoire étant configurée pour stocker une succession de N données incluant les G données initiales, N étant supérieur ou égal à G, et
- des premiers moyens de traitement (MTR1) configurés pour extraire successivement les N données des D zones mémoires du moyen de mémoire et pour détruire au moins une partie du contenu de la zone mémoire correspondante lors de l'extraction des N données correspondantes.

7. Dispositif selon la revendication 6, dans lequel chaque zone mémoire (ZMi) inclut une matrice de cellules mémoires ayant deux rangées et N colonnes, chaque cellule-mémoire comprenant un transistor d'état ayant une grille de commande et une grille flottante, sélectionnable par un transistor de sélection vertical enterré dans un substrat et comportant une grille de sélection enterrée, chaque colonne de cellules-mémoires incluant une paire de cellules-mémoires jumelles, les deux transistors de sélection d'une paire de cellules-mémoires jumelles ayant une grille de sélection commune, et les premiers moyens de traitement (MTR1) sont configurés pour stocker dans la zone mémoire la succession de N bits de sorte que, à l'exception du dernier bit de la succession, un bit courant de ladite succession est stocké dans deux cellules-mémoires situées sur une même rangée et sur deux colonnes adjacentes et un bit courant et le bit suivant sont respectivement stockés dans deux cellules jumelles.

8. Dispositif selon la revendication 7, dans lequel les premiers moyens de traitement (MTR1) sont configurés pour, afin de pouvoir lire un bit stocké dans une première cellule jumelle, remplacer au préalable le bit stocké dans la deuxième cellule jumelle par un bit de référence ayant une valeur de référence choisie pour permettre une restitution correcte de la valeur du bit stocké dans la première cellule jumelle.

9. Dispositif selon la revendication 8, dans lequel les premiers moyens de traitement (MTR1) sont en outre configurés pour lire séquentiellement les N bits de ladite succession et remplacer un bit courant déjà lu de ladite information par le bit de référence avant de pouvoir lire le bit suivant de ladite succession, de façon à détruire ledit bit courant lors de l'extraction dudit bit suivant.

10. Dispositif selon l'une des revendications 6 à 9, dans lequel la matrice de cellules-mémoire de chaque zone mémoire (ZMi) comporte une seule ligne de bits par colonne, connectée aux drains des transistors d'état de la paire de cellules jumelles de la colonne correspondante, et une ligne de contrôle de grille, par rangée de cellules-mémoire, connectée à toutes les grilles de commande des transistors d'états des cellules-mémoires de la rangée correspondante.

11. Dispositif selon l'une des revendications 6 à 10, dans lequel les premiers moyens de traitement (MTR1) comprennent un décodeur colonne configuré pour sélectionner individuellement les deux lignes de bit associées aux deux colonnes situées aux deux extrémités de la zone mémoire et pour sélectionner simultanément deux lignes de bits adjacentes, aussi bien pour l'opération de stockage de de la succession de N bits que pour l'opération de lecture et de remplacement préalable des bits.

12. Dispositif selon l'une des revendications 6 à 11, dans lequel le groupe de données de sortie (HUK2) comprend les N bits de ladite succession.

13. Dispositif selon l'une des revendications 1 à 12, dans lequel les moyens de gestion (MGST) comprennent
- un deuxième module de fonction physiquement non clonable (MPF2) configuré pour générer un groupe de données supplémentaires (HUK1), et
- des moyens d'élaboration (MLB) configurés pour élaborer le groupe de données de sortie (HUK2) à partir d'au moins le groupe de données initiales (RD2) et d'au moins le groupe de données supplémentaires (HUK1).

14. Dispositif selon la revendication 13, dans lequel les moyens de gestion (MGST) sont configurés en outre pour délivrer sur une deuxième interface de sortie (INST2) du dispositif le groupe de données supplémentaires (HUK1).

15. Dispositif selon la revendication 13 ou 14, dans lequel le deuxième module de fonction physiquement non clonable comprend (MPF2):
- un deuxième ensemble (2) de cellules-mémoires non volatiles possédant chacune un transistor de sélection enterré dans un substrat semi-conducteur et un transistor d'état du type à appauvrissement ayant une grille de commande et une grille flottante électriquement connectées, les transistors d'état ayant des tensions de seuils effectives respectives appartenant à une distribution aléatoire commune, et
- des deuxièmes moyens de traitement (MT2) configurés pour délivrer le groupe de données supplémentaires (HUK1) à partir d'une lecture des tensions de seuil effectives des transistors d'état des cellules-mémoires dudit deuxième ensemble.

16. Dispositif selon la revendication 15, dans lequel
- les deuxièmes moyens de traitement (MT2) comportent des deuxièmes moyens de lecture (LECT2) configurés pour effectuer ladite lecture,
- le deuxième ensemble (2) de cellules-mémoires non volatiles est organisé en deux deuxièmes sous-ensembles matriciels (20L ; 20R) disposés symétriquement par rapport aux deuxièmes moyens de lecture, toutes les lignes des deux deuxièmes sous-ensembles matriciels étant parallèles, et
- les deuxièmes moyens de lecture (LECT2) sont configurés pour effectuer ladite lecture comportant des lectures différentielles des tensions de seuil effectives des transistors d'état des paires de cellules-mémoires symétriques et situées respectivement dans les deux deuxièmes sous-ensembles sur des colonnes homologues de ces deux deuxièmes sous-ensembles.

17. Dispositif selon la revendication 15 ou 16, dans lequel les deuxièmes moyens de traitement (MT2) comportent un troisième ensemble (3) de cellules-mémoires (CELM) possédant chacune un transistor de sélection enterré dans un substrat semi-conducteur et un transistor d'état, de préférence du type à appauvrissement, ayant une grille de commande et une grille flottante, les cellules-mémoires du troisième ensemble étant destinées à contenir des informations de fiabilité (MSK) représentatives de la fiabilité ou de la non fiabilité des contenus des paires de cellules-mémoires du deuxième ensemble.

18. Dispositif selon la revendication 17, dans lequel le troisième ensemble (3) comporte un agencement matriciel de cellules-mémoires partageant les mêmes colonnes que celles de l'agencement matriciel de cellules-mémoires du deuxième ensemble (2).

19. Dispositif selon l'une des revendications 17 ou 18, dans lequel les deuxièmes moyens de traitement (MT2) comportent des premiers moyens de génération (MGEN1) configurés pour générer lesdites informations de fiabilité en prenant en compte une valeur de marge sur les lectures différentielles des tensions de seuil effectives des transistors d'état des paires de cellules-mémoires du deuxième ensemble.

20. Système selon l'une des revendications 15 à 19 prise en combinaison avec la revendication 17, dans lequel les deuxièmes moyens de traitement (MT2) comprennent des deuxièmes moyens de génération (MGEN2) configurés pour générer ledit groupe de données supplémentaires au moins à partir des lectures différentielles des tensions de seuil effectives des transistors d'état des paires de cellules-mémoires du deuxième ensemble, et desdites informations de fiabilité de ces paires de cellules-mémoires.

21. Dispositif selon l'une des revendications précédentes, prise en combinaison avec les revendications 3, 15 et 17, dans lequel le premier ensemble (1) de cellules-mémoire, le deuxième ensemble (2) de cellules-mémoire et le troisième ensemble (3) de cellules-mémoire possèdent chacun une architecture comportant deux lignes de bits par colonne de cellules-mémoires, les colonnes de cellules-mémoire comportant des paires de cellules-mémoire jumelles, les deux transistors de sélection d'une paire de cellules-mémoire jumelles ayant une grille de sélection commune, deux cellules-mémoires adjacentes jumelles d'une même colonne n'étant pas reliées à la même ligne de bits et deux cellules-mémoires adjacentes non jumelles d'une même colonne étant reliées à la même ligne de bits.

22. Dispositif selon les revendications 10 et 21, dans lequel certaines colonnes du dispositif de mémoire non volatile (DM) sont communes avec certaines colonnes des premier, deuxième et troisième ensembles, et les moyens de gestion (MGST) comportent un décodeur colonne unique (COLDEC) configuré pour
- sélectionner individuellement les deux lignes de bit associées aux deux colonnes situées aux deux extrémités de chaque zone mémoire,
- sélectionner simultanément deux lignes de bits adjacentes et une ligne de bit des premier, deuxième et troisième ensembles commune à l'une de ces deux bits adjacentes, et
- sélectionner individuellement les autres lignes de bits des premier, deuxième et troisième ensembles.

23. Procédé de génération automatique d'un code unique non prédictible (HUK2) à ladite première interface de sortie d'un dispositif de fonction physiquement non clonable (DIS) selon l'une des revendications 1 à 22 prise en combinaison avec le revendication 6, comprenant une mise sous tension du dispositif (DIS) et au moins une lecture d'une zone mémoire du dispositif de mémoire non volatile.

24. Procédé selon la revendication 23, applicable en outre au dispositif selon la revendication 15, comprenant en outre une lecture des tensions de seuil effectives des transistors d'état des cellules-mémoires dudit deuxième ensemble, les grilles de commande des transistors d'état de ces cellules-mémoires étant connectées à la masse lors de ladite lecture, et une élaboration du code unique non prédictible (HUK2) à partir du contenu de la zone mémoire lue et du groupe de données supplémentaires (HUK1) obtenu à partir de ladite lecture.

25. Procédé de réalisation d'un dispositif de fonction physiquement non clonable (DIS) selon les revendications 5, 6 et 19, comprenant une réalisation du dispositif au sein d'un circuit intégré, et lors d'une phase de test du circuit intégré,
- une génération du groupe de données initiales (RD2),
- un stockage de ladite information de N données dans les D zones mémoire,
- une programmation ou un effacement d'une partie des cellules-mémoires du premier ensemble après la génération du groupe de données initiales,
une génération et un stockage des informations de fiabilité (MSK).
